# EUROPEAN PATENT APPLICATION

(11) **EP 4 353 987 A1**
(43) Date of publication of application: **17.04.2024**
(21) Application number: 23193228.6
(22) Date of filing: 24.08.2023
(51) Int. Cl.: F16F 7/10, F16F 9/34

(54) **HIGH TEMPERATURE FLUID ISOLATOR WITH LARGE DYNAMIC DISPLACEMENT CAPABILITY**

(30) Priority: 25.08.2022 US 202263400871 P
(71) Applicant: LORD Corporation, Cleveland OH 44124 (US)
(72) Inventor: WHITEFORD, Gerald P, Waterford, PA 16441 (US); LEICHT, Douglas, Cranesville, PA 16410 (US); GREGORY, Jason, Girard, PA 16417 (US); SACCO, Jonathan, Erie, PA 16505 (US)
(74) Representative: Murgitroyd & Company

(57) **Abstract**

The present disclose describes a fluid isolator mount. The mount provides a long service life under high temperatures and large dynamic displacements. The mount utilizes metallic flexures and dynamic fluid chambers. The mount provides vibration isolation at selected frequencies while precluding damping effects.

## Description

### CROSS REFERENCE TO RELATED APPLICATIONS

The present application claims priority to U.S. Provisional Application No. 63/400,871 filed on August 25, 2022 which is incorporated herein.

### BACKGROUND

For the purposes of this disclosure an understanding of two terms is important. The first term is vibration damping and the second term is vibration isolation. While some may consider the two terms interchangeable, this would be an incorrect position. Vibration damping refers to the dissipation of vibration energy. A vibration damper absorbs or changes vibration energy to reduce the amount of energy transmitted from one device to another. In contrast, vibration isolation prevents the transmission of vibration energy. In other words vibration energy generated, e.g. by an engine, does not enter a structure supporting the engine. As will be discussed below, vibration isolation requires an understanding of the natural frequency at which a structure or device vibrates naturally or resonates. The present disclosure is directed to a fluid isolator which acts as a vibration isolator. The design of the disclosed vibration isolator seeks to preclude damping effects as damping effects are detrimental to vibration isolation.

### SUMMARY

The present disclosure describes a vibration isolator. The vibration isolator comprise:
a housing, the housing having an interior wall which defines an internal cavity;
an upper cap secured to the top of the housing;
a lower cap secured to the bottom of the housing;
a first flexure positioned adjacent to the upper cap, the first flexure having an exterior surface and the first flexure having a fluid tight seal to either the upper cap or the housing proximate to the upper cap;
a second flexure positioned adjacent to the lower cap, the second flexure having an exterior surface and the second flexure having a fluid tight seal to either the lower cap or the housing proximate to the lower cap;
a piston located within the internal cavity, the piston having an exterior surface, a top and a bottom, wherein the top of the piston has a fluid tight seal with the first flexure and the bottom of the piston has a fluid tight seal with the second flexure;
the exterior surface of the piston having an external diameter sized to fit against the interior wall of the housing such that movement of the piston within the housing produces a dynamic seal between the exterior surface of the piston and the interior wall of the housing;
a groove positioned in the exterior surface of the piston, the groove providing a fluid path from the top of the piston to the bottom of the piston wherein the groove terminates at a first port in the top of the piston and terminates at a second port at the bottom of the piston;
a first fluid chamber defined by the area between the top of the piston, the interior wall of the housing and the exterior surface of the first flexure;
a second fluid chamber defined by the area between the bottom of the piston, the interior wall of the housing and the exterior surface of the second flexure;
wherein the first fluid chamber, the second fluid chamber and the fluid path defined by the groove position on the exterior piston define a dynamic fluid chamber.

The present disclosure also describes other embodiments of a vibration isolator such as a mount that comprises:
a housing, the housing having an interior wall which defines an internal cavity;
an upper cap secured to the top of the housing;
a lower cap secured to the bottom of the housing, the lower cap having a hole passing through the lower cap;
a first flexure positioned adjacent to the upper cap, the first flexure having an exterior surface and the first flexure having a fluid tight seal to either the upper cap or the housing proximate to the upper cap;
a second flexure positioned adjacent to the lower cap, the second flexure having an exterior surface and the second flexure having a fluid tight seal to either the lower cap or the housing proximate to the lower cap;
a first diaphragm secured to the housing, the first diaphragm having an upper and a lower surface;
the exterior of the first flexure, the upper surface of the first diaphragm and the interior wall of the housing define a first gas chamber;
a second diaphragm secured to the housing, the second diaphragm having an upper and a lower surface;
the exterior of the second flexure, the lower surface of the second diaphragm and the interior wall of the housing define a second gas chamber;
a cylindrical segment located between the first diaphragm and the second diaphragm, the cylindrical segment having an upper surface with a first groove in the upper surface, the cylinder segment having a lower surface with a second groove in the lower surface, a hole in the cylindrical segment provides fluid communication between the first and second grooves;
a central passageway passing through the cylindrical segment from the upper surface to the lower surface;
a first cylinder plate covers the upper surface of the cylindrical segment, the first cylinder plate having a first fluid port providing fluid communication through the first cylinder plate to the first groove;
a second cylinder plate covers the lower surface of the cylindrical segment, the second cylinder plate having second fluid port providing fluid communication through the second cylinder plate to the second groove;
the first cylinder plate, the first groove, the second cylinder plate and the second groove cooperate to define a fluid flow path;
a first piston having an upper surface, a lower surface and an outer surface, the first piston positioned above the first cylinder plate with the first piston outer surface in contact with the interior wall of the housing, the first piston providing a dynamic seal with the interior wall of the housing when the first piston moves;
a second piston having an upper surface, a lower surface and an outer surface, positioned below the second cylinder plate with the second piston outer surface in contact with the interior wall of the housing, the second piston providing a dynamic seal with the interior wall of the housing when the second piston moves;
a dynamic fluid chamber defined by the area between the lower surface of the first piston, the interior wall of the housing, the upper surface of the first cylinder plate, the first groove, the second groove, and the upper surface of the second piston;
a first non-dynamic fluid chamber defined by the upper surface of the first piston and the lower surface of the first diaphragm;
a second non-dynamic fluid chamber defined by the lower surface of the second piston and the upper surface of the second diaphragm;
a first gas chamber defined by the upper surface of the first diaphragm, the interior wall of the housing and the exterior surface of the first flexure;
a second gas chamber defined by the lower surface of the second diaphragm, the interior wall of the housing and the exterior surface of the second flexure; and,
a first shaft carried by the first piston, the first shaft extending downward through the central passageway passing through the cylindrical segment, the second piston secured to the first shaft, a connecting rod secured to the first shaft and extending through the hole passing through the lower cap.

The present disclosure also provides a vibration isolator. The vibration isolator comprises
a housing, the housing having an interior wall which defines an internal cavity;
an upper cap secured to the top of the housing;
a lower cap secured to the bottom of the housing;
a first flexure positioned adjacent to the upper cap, the first flexure having an exterior surface and the first flexure having a fluid tight seal to either the upper cap or the housing proximate to the upper cap;
a second flexure positioned adjacent to the lower cap, the second flexure having an exterior surface and the second flexure having a fluid tight seal to either the lower cap or the housing proximate to the lower cap;
a piston located within the internal cavity, the piston having an exterior surface, a top and a bottom, wherein the top of the piston has a fluid tight seal with the first flexure and the bottom of the piston has a fluid tight seal with the second flexure;
a sleeve secured to the interior wall of the housing, the sleeve separates the piston from the housing and provides a cylinder wall for the piston;
the exterior surface of the piston having an external diameter sized to fit against the sleeve such that movement of the piston produces a dynamic seal between the exterior surface of the piston and the sleeve;
a groove positioned in the interior wall of the housing, the groove providing a fluid path from the top of the piston to the bottom of the piston wherein a first end of the groove terminates at a first port in the sleeve and a second end of the groove terminates at a second port in the sleeve;
a first fluid chamber defined by the area between the top of the piston, the sleeve and the exterior surface of the first flexure;
a second fluid chamber defined by the area between the bottom of the piston, the sleeve and the exterior surface of the second flexure;
wherein the first fluid chamber, the second fluid chamber and the fluid path defined by the groove define a dynamic fluid chamber.

Further embodiments of the present disclosure are defined in the following detailed description and the appended claims and drawings.

### BRIEF DESCRIPTION OF THE DRAWINGS

FIG. 1 provides a perspective view of one embodiment of the vibration isolator.
FIG. 2 is a side cut-away view of FIG. 1 taken along lines 2-2.
FIG. 3-6 are side cut-away views of the embodiment of FIG. 1 taken along the indicated lines in FIG. 2 with various components removed to better depict internal aspects of the disclosed embodiment.
FIG. 6 is a side cut-away view of the embodiment of FIG. 1 taken along lines 6-6.
FIG. 7 is a top view of the upper surface of the cylindrical segment.
FIG. 8 provides a perspective view of one embodiment of the vibration isolator.
FIG. 9 is a side cut-away view of FIG. 8 taken along lines 9-9.
FIG. 10 is a view of the housing of FIG. 8 with a top view of the piston.
FIG. 11 is a view of the embodiment of FIG. 9 depicting the piston sleeve and the bellows.
FIG. 12 is a view of the embodiment of FIG. 9 depicting the piston and the bellows.
FIG. 13 is a side cut-away view of the embodiment of FIG. 8 taken along lines 13-13.
FIG. 14 is a perspective view of another embodiment of the vibration isolator.
FIG. 15 is a side cut-away view taken along lines 15-15 of FIG. 14.
FIGS. 16-19 are perspective side cut-away views taken along lines 16-16 of FIG. 14.
FIG. 20 is a top section view of the piston taken along lines 20-20 of FIG. 14.
FIG. 21 is a top view of the piston of the embodiment of FIG. 14 located within the vibration isolator housing.
FIG. 22 is a side view of another embodiment of the vibration isolator.
FIG. 23 is a side cut-away view of the embodiment of FIG. 22 taken along lines 23-23.
FIG. 24 is a perspective side cut-away view of the embodiment of FIG. 22 taken along lines 24-24.
FIG. 25 is an alternative embodiment of the vibration isolator shown in a side cut-away view depicting the inclusion of a pressure charging valve.
FIG. 26 is alternative embodiment of the vibration isolator shown in a side cut-away view depicting the inclusion of a second shaft connection point.
FIG. 27 is an alternative embodiment of the vibration isolator shown in a side cut-away view depicting the inclusion of fluid communication channels.
FIG. 28 is an alternative embodiment of the vibration isolator shown in a side cut-away view depicting a fluid flow path located in the housing taken along line 28-28 of FIG. 29.
FIG. 29 is a perspective view of the housing corresponding to the embodiment of FIG. 28.
FIG. 30 is a perspective cut-away view taken along lines 30-30 of FIG. 29.
FIG. 31 is a perspective view of the embodiment corresponding to FIG. 8 depicting the piston sleeve and the fluid inlet track in the top of the piston.
FIG. 32 is a side perspective view of the piston of the embodiment corresponding to FIG. 8 showing the fluid flow path and the lower outlet.
FIG. 33 is a side perspective view of the piston of the embodiment corresponding to FIG. 8 showing the fluid flow path and the upper inlet.
FIG. 34 is a perspective cut-away view of the embodiment of FIG. 8 taken along lines 13-13 with the housing removed.
FIG. 35 is a table showing the notch effect demonstrating the vibration isolation at the notch frequency.
FIG. 36 is a table showing a comparison of elastomeric stiffness to a fluid isolator notch effect.
FIG. 37 is a side cut-away view showing an embodiment with a cylindrical segment that is separate from the housing.
FIG. 38 is a mathematical model suitable for determining and demonstrating the notch effect.

### DETAILED DESCRIPTION

The present disclosure may be understood more readily by reference to these detailed descriptions. For simplicity and clarity of illustration, where appropriate, reference numerals may be repeated among the different figures to indicate corresponding or analogous elements. The following description is not to be considered as limiting the scope of the embodiments described herein. The drawings are not necessarily to scale and the proportions of certain parts may have been exaggerated to better illustrate details and features of the present disclosure. Also, the phraseology and terminology employed herein is for the purpose of description and should not be regarded as limiting except where indicated as such.

Throughout this disclosure, the terms "about", "approximate", and variations thereof, are used to indicate that a value includes the inherent variation or error for the device, system, or measuring method being employed as recognized by those skilled in the art.

The disclosed vibration isolators are commonly used as engine mounts; however, the isolators are also well suited for other applications requiring vibration isolation between two joined components. As disclosed herein, the improved isolators have an improved service life due to the separation or isolation of dynamic pressure from the spring element or elimination of elastomeric spring elements. In most embodiments, the vibration isolator is free of elastomeric spring elements. Additionally, the configuration of the isolators reduces dynamic pressure on seals, including seals for the metallic components, thereby increasing seal reliability. In particular, the present disclosure provides fluid inertial isolators configured to generate high dynamic pressures while isolating static seals from the resulting dynamic pressure. Further, the configurations of the improved isolators provide enhanced tolerance of high temperature environments.

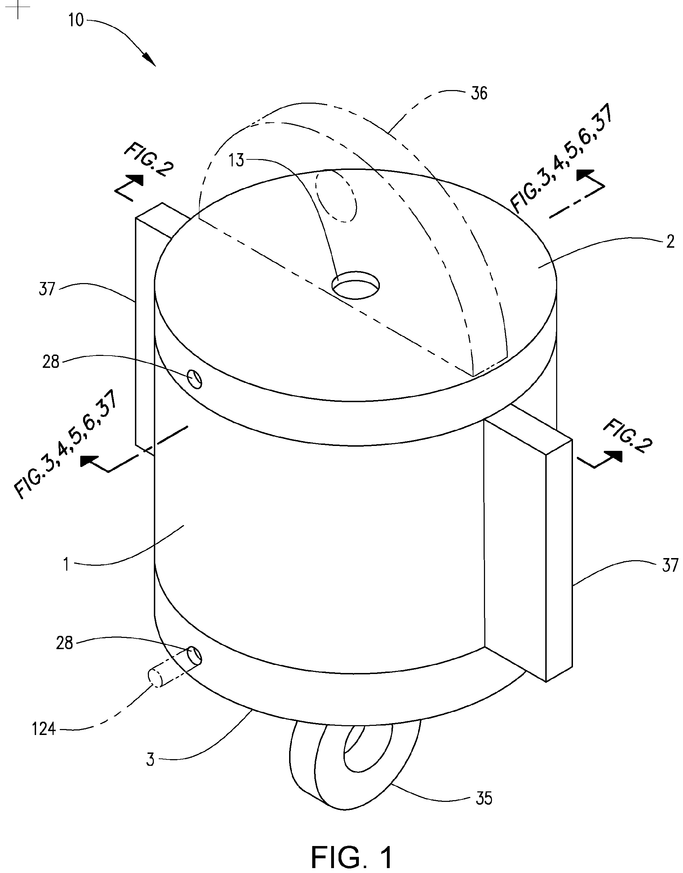

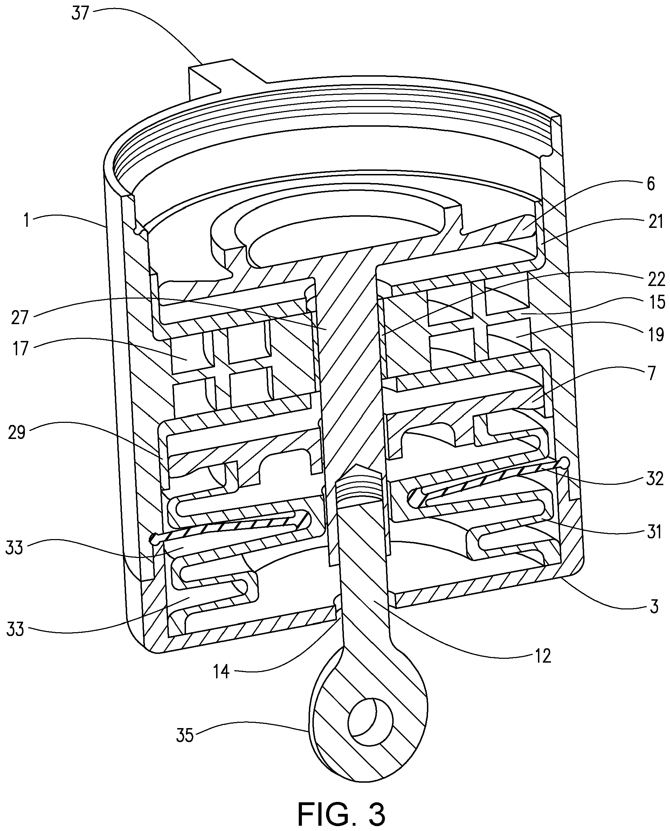

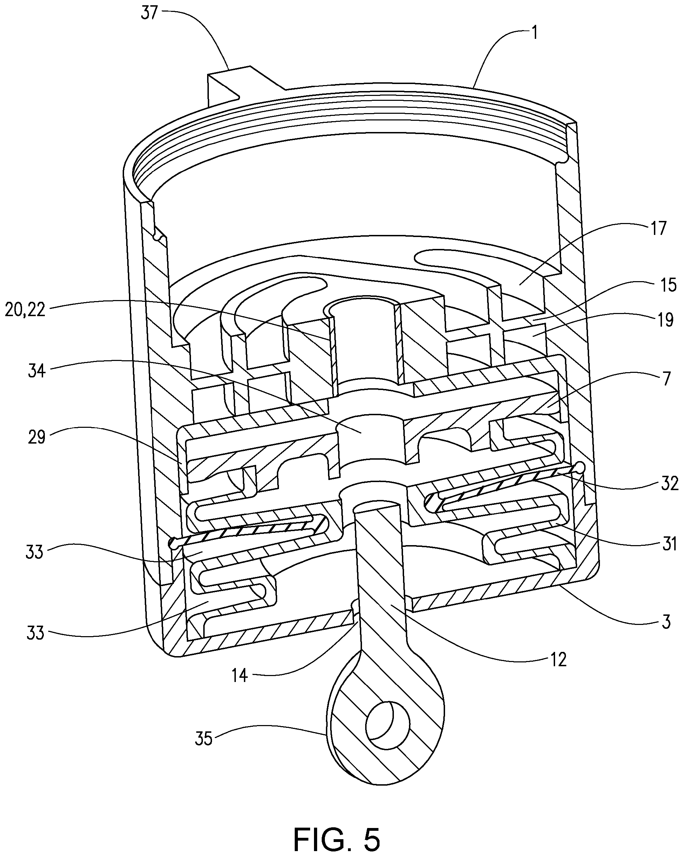

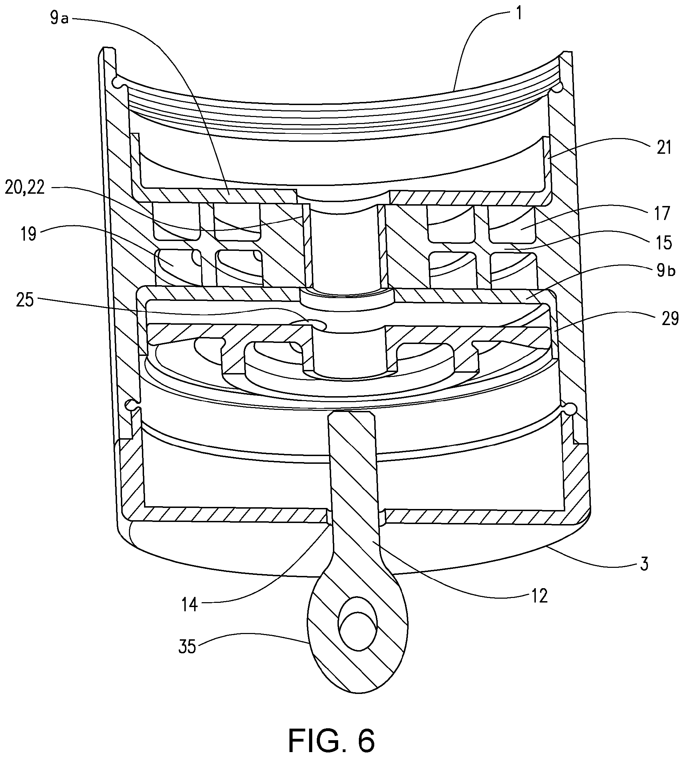

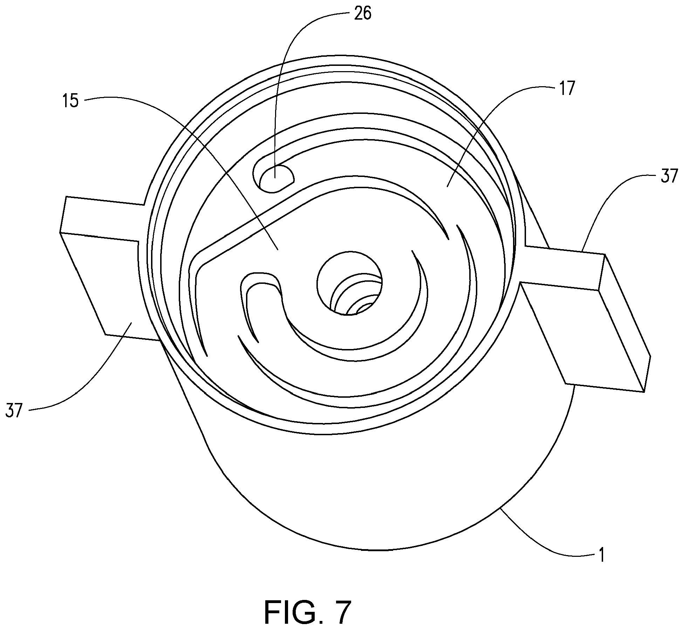

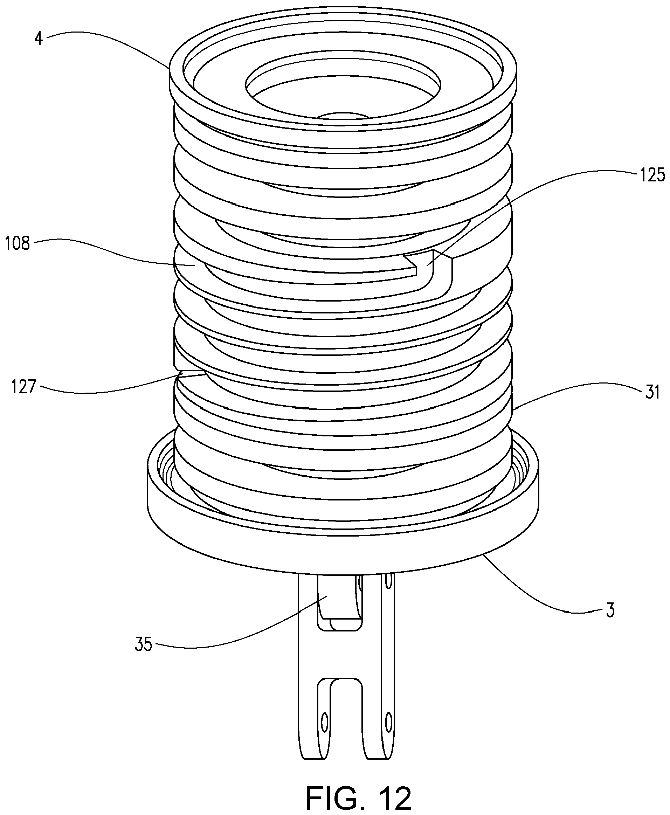

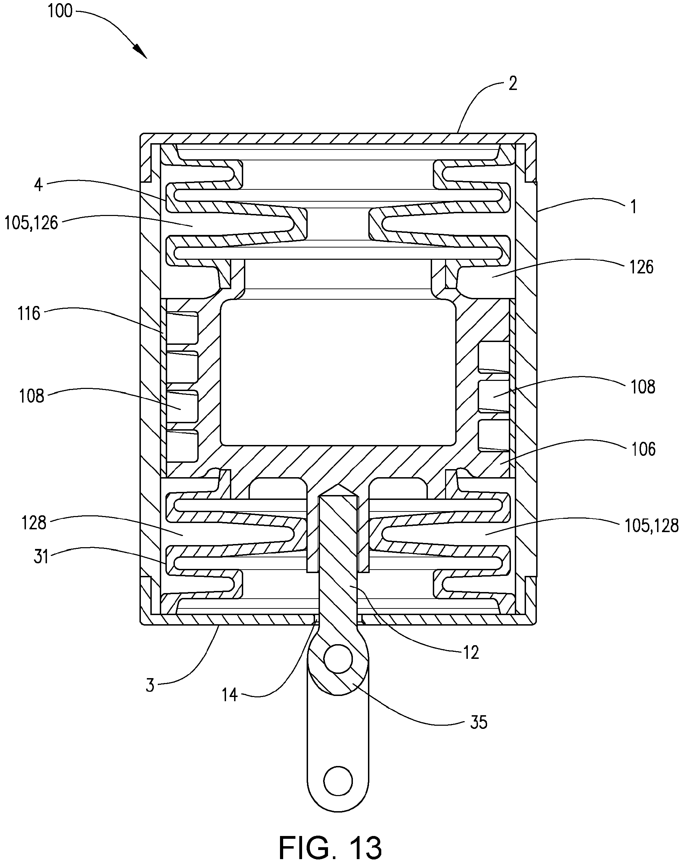

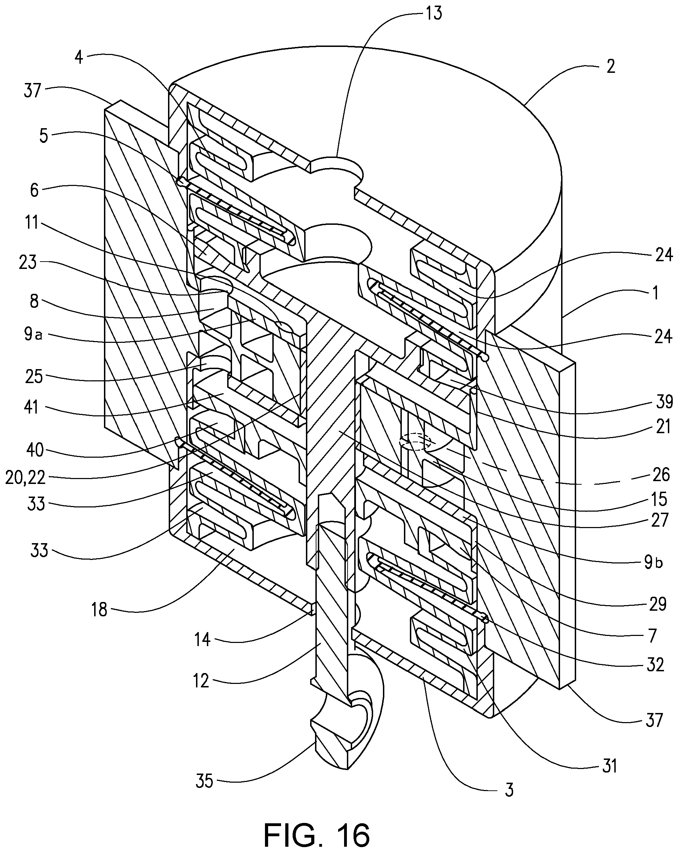

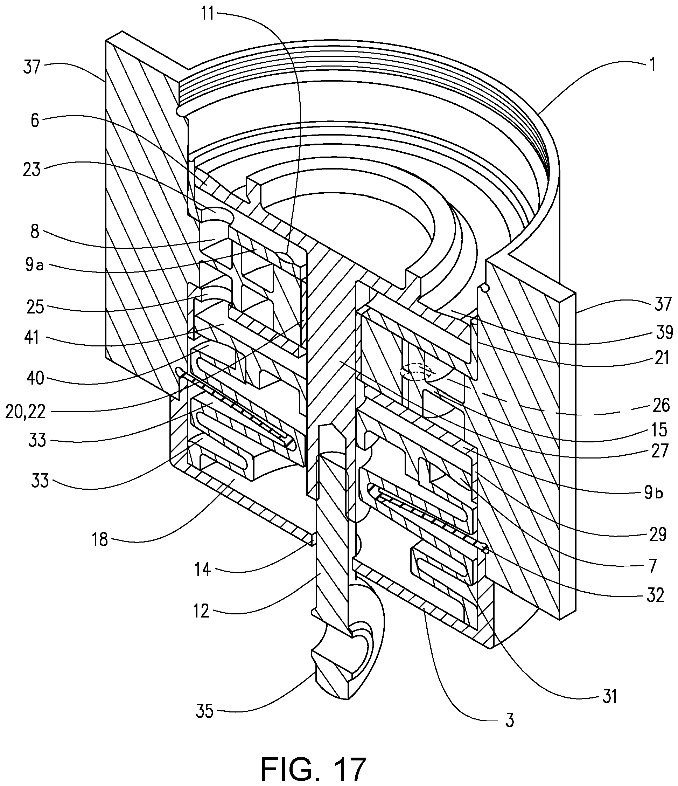

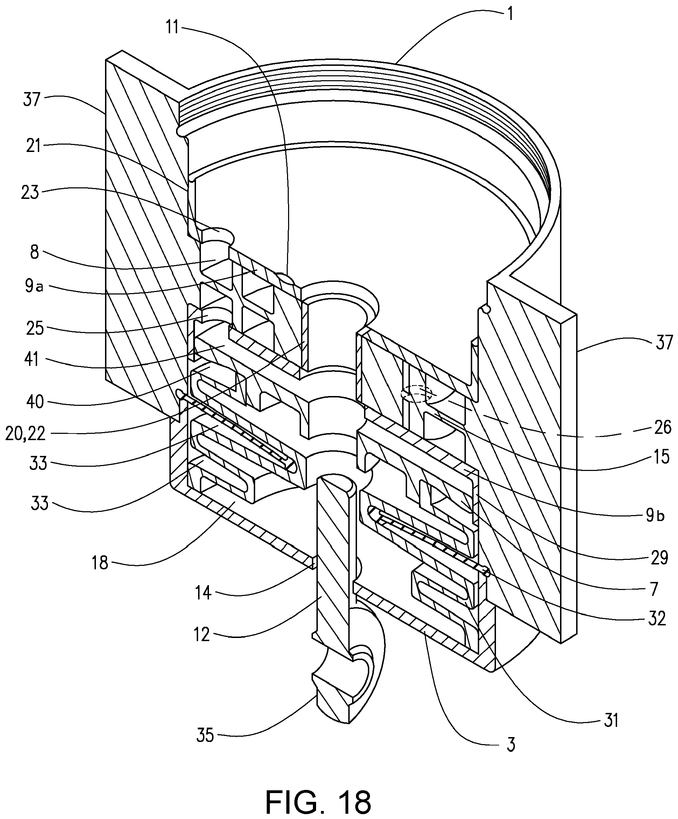

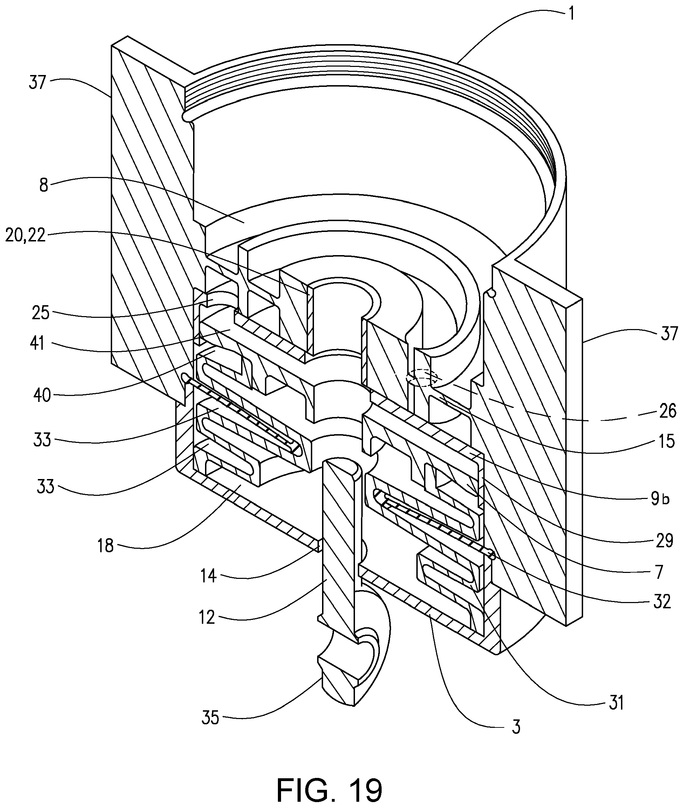

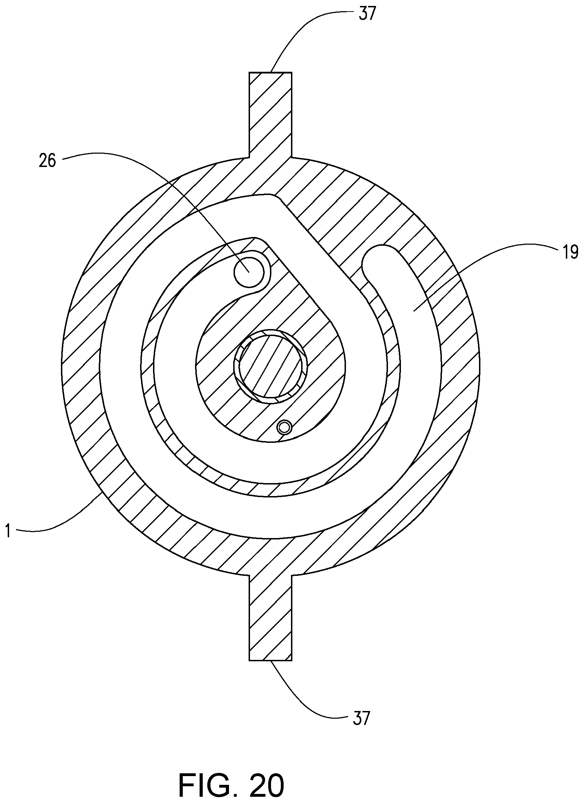

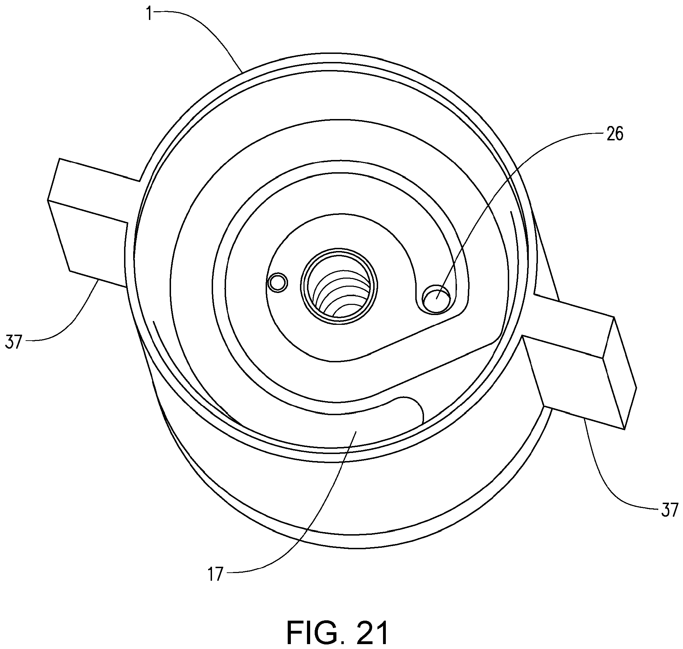

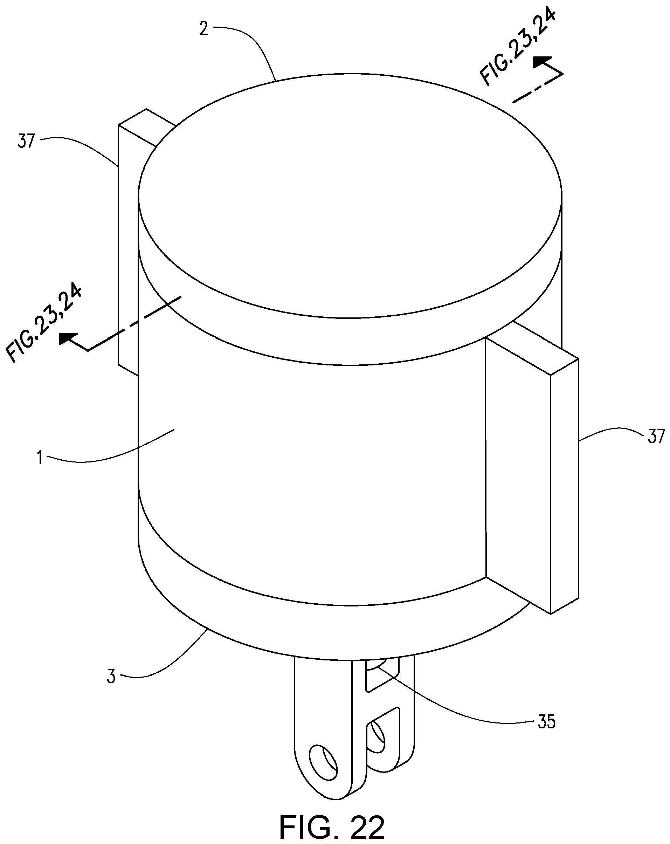

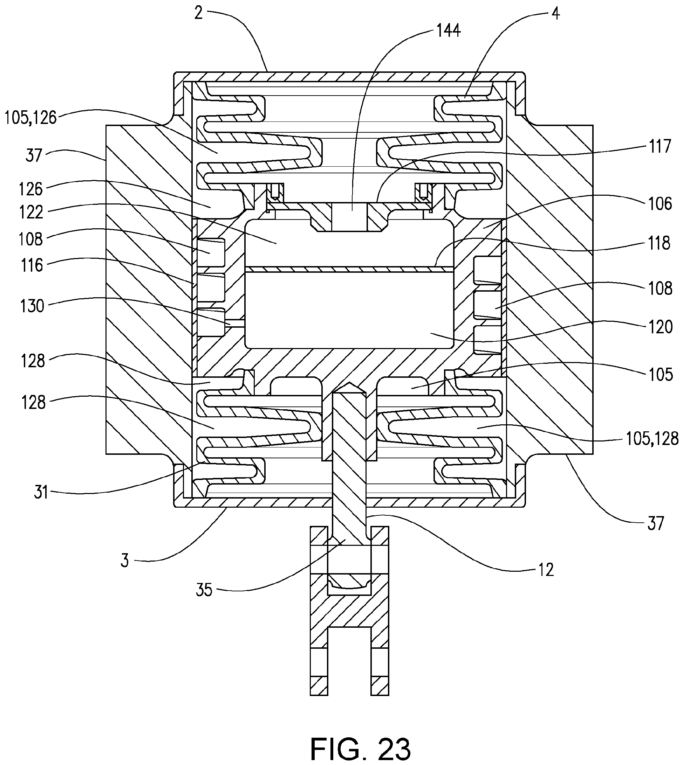

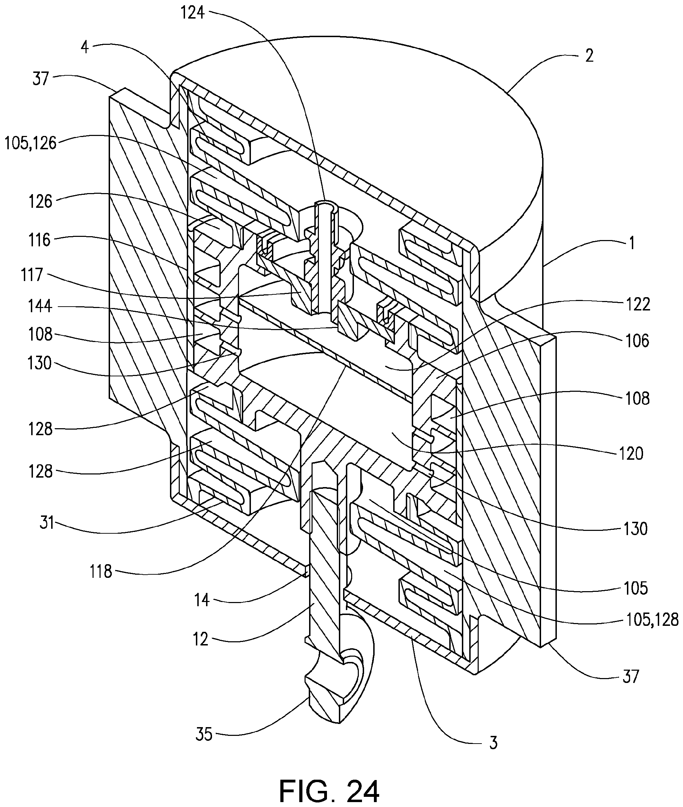

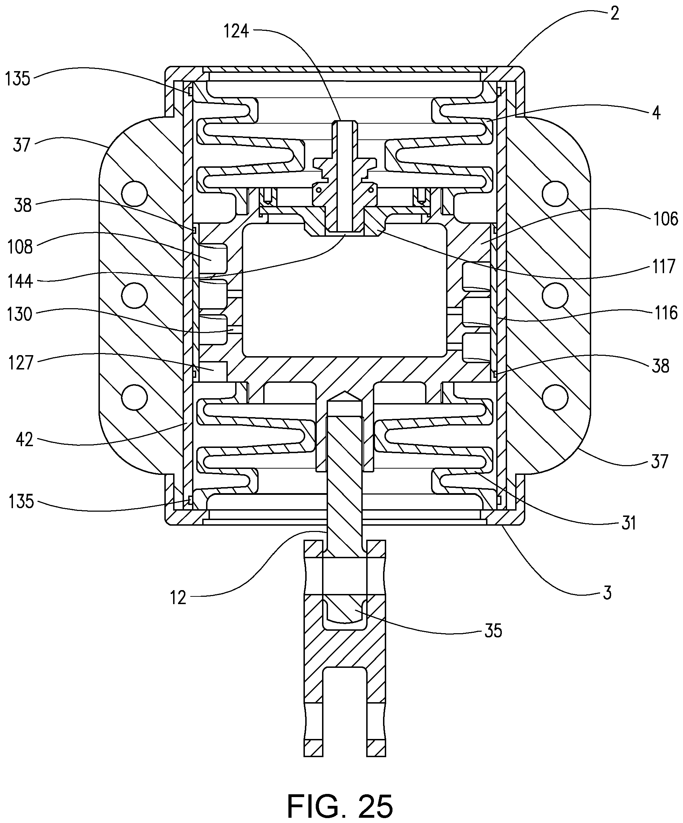

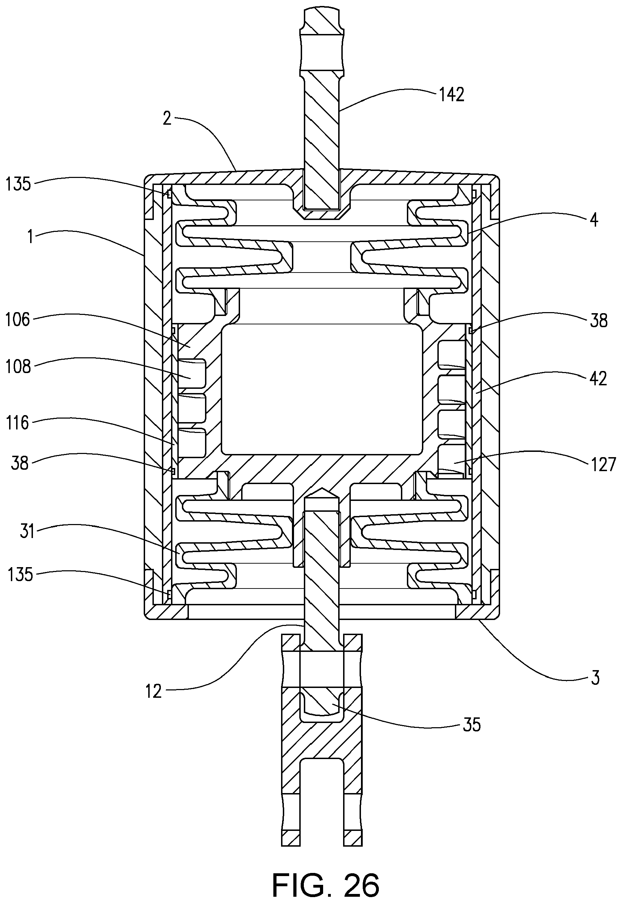

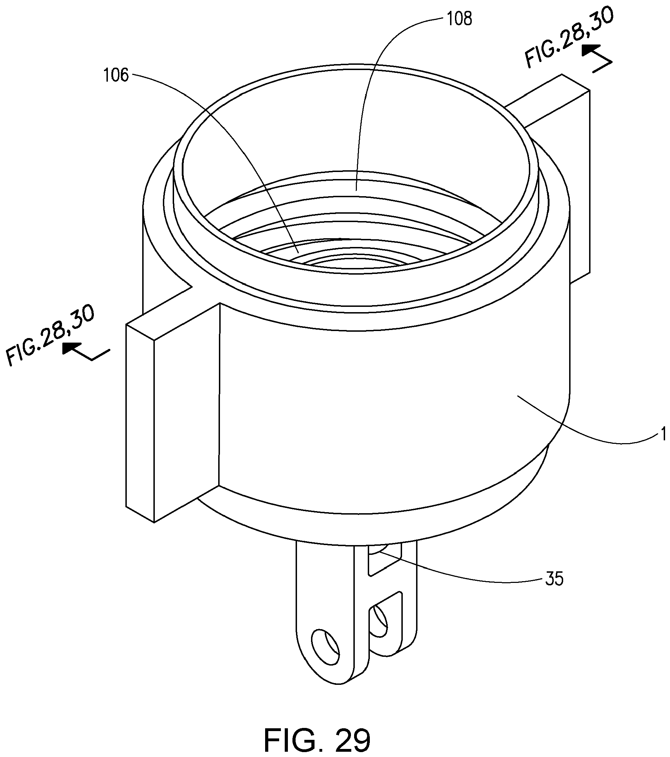

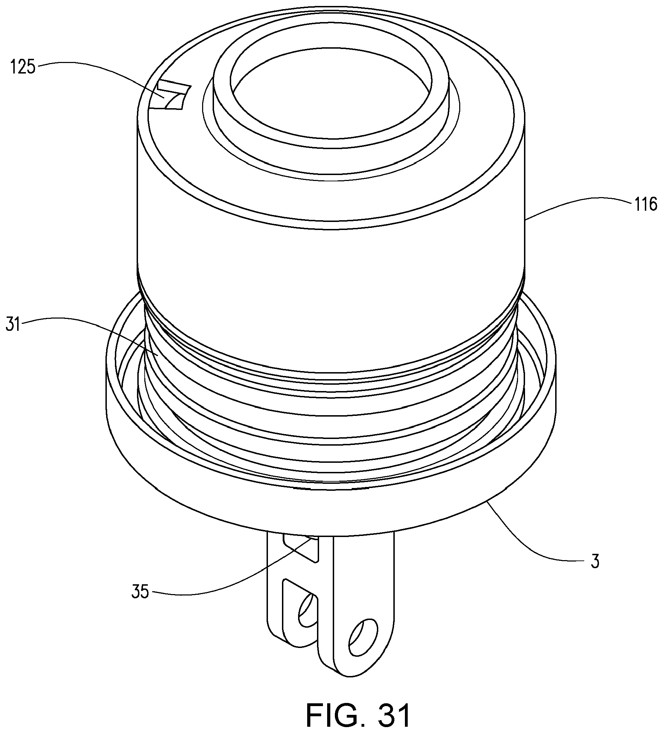

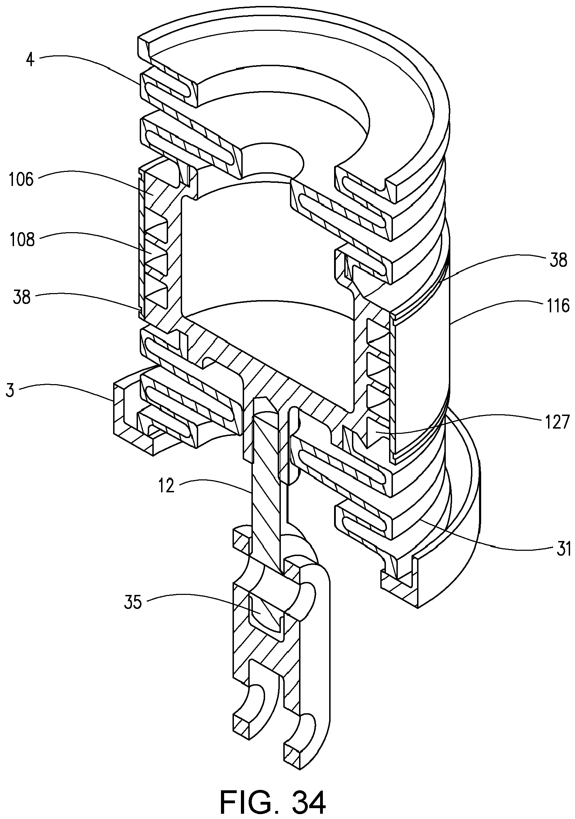

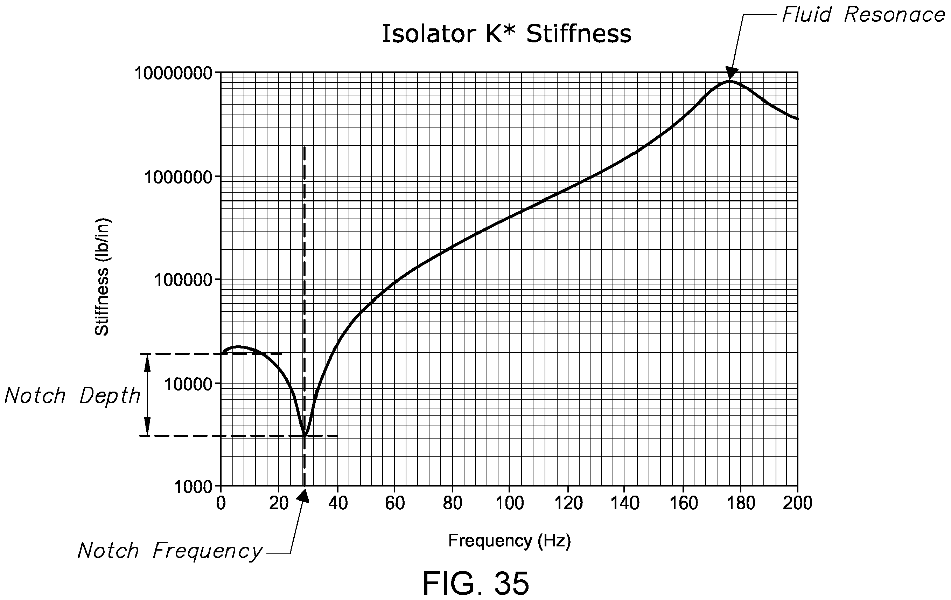

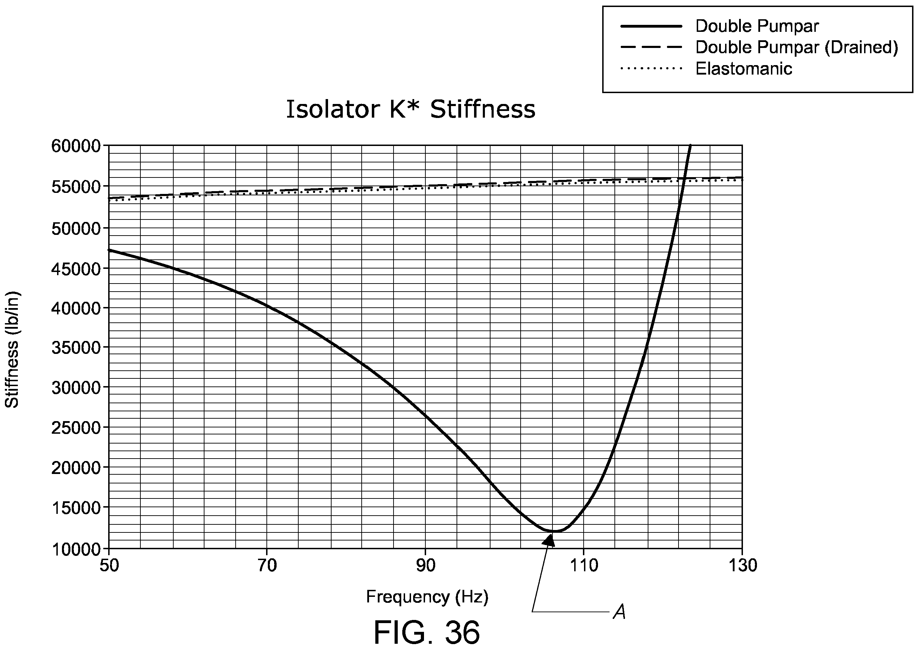

FIGS. 1-34 and 37 disclose various embodiments of an improved vibration isolator 10, for conciseness referred to herein as isolator 10. In each of the disclosed embodiments, the improved isolator 10 provides a dynamic hydraulic device having a tuned function suitable for generating the desired notch effect as depicted in FIGS. 35 and 36.

As used herein, the terms "dynamic seal" and "dynamic sealing" indicate a seal or fit between components which sufficiently precludes leakage of fluid under dynamic motion conditions such that the desired notch effect is created at the desired operational frequency. State another way, the dynamic seal substantially precludes a damping effect which would result from fluid seepage outside of the desired fluid flow path. Accordingly, the resulting dynamic seal is sufficient to produce the desired notch effect as exemplified in FIG. 35 as determined by the intended operation environment. Thus, a minute amount of fluid may seep past the dynamic seal but such amount is insufficient to create a damping effect within isolator 10. In contrast under non-dynamic conditions, i.e. static conditions, fluid leakage past the seals may occur. This leakage under static conditions would coincide with the non-operational condition of the components joined by isolator 10. The term "dynamic fluid chamber" means a chamber which contains fluid moving from one portion of the chamber through a passageway to another portion of the chamber. The term "non-dynamic fluid chamber" refers to an isolated chamber of fluid.

As depicted in FIGS. 1-7, isolator 10 includes a housing 1, an upper cap 2 and a lower cap 3. Upper cap 2 has a port 13 which provides fluid or atmospheric communication between the interior of housing 1 and the exterior. Lower cap 3 has a port 14. Upper cap 2 and lower cap 3 are secured to housing 1 in fluid tight manner. Securement may be by any conventional means such as, but not limited to, threads carried by each component.

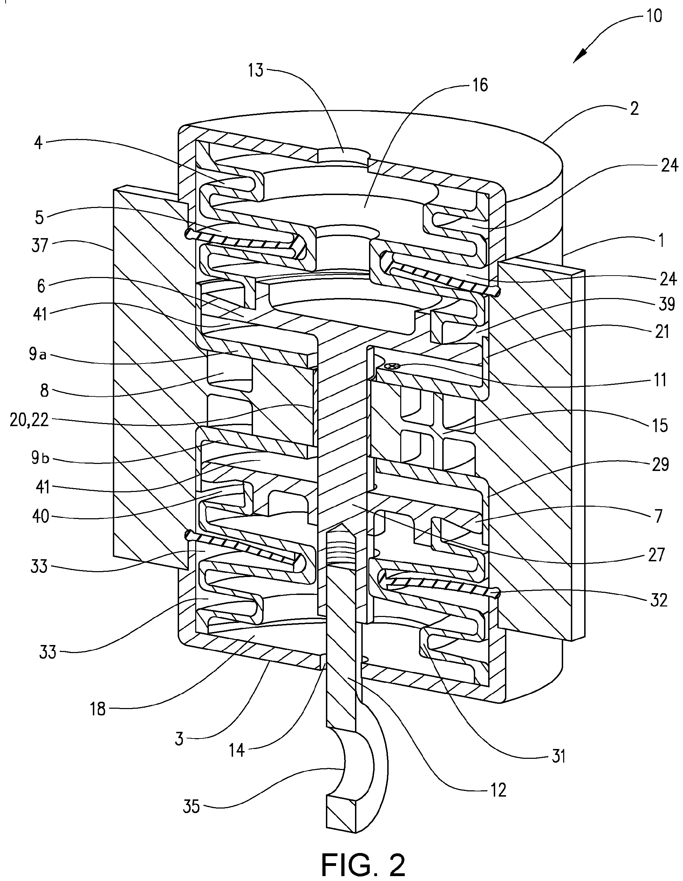

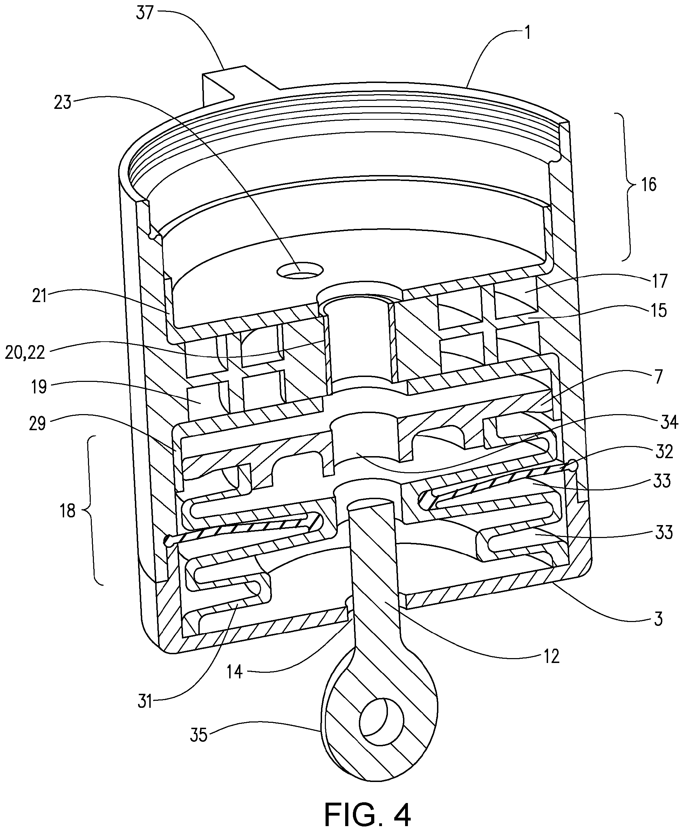

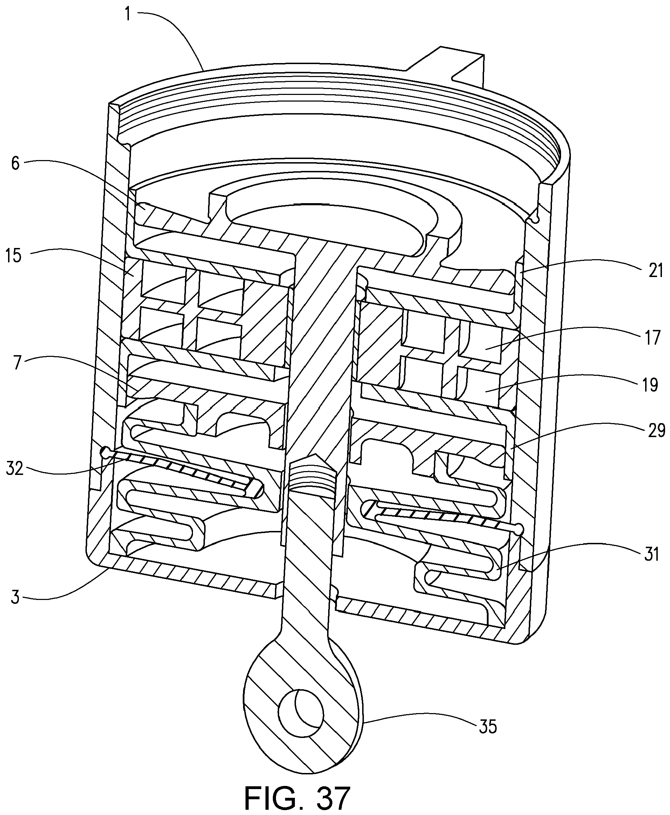

A cylindrical segment 15 divides the interior of housing 1 into upper and lower chambers 16, 18, see FIG. 4. Cylindrical segment 15 may be integral with housing 1, see FIGS. 2-6. Alternatively, cylindrical segment may be a separate component which is inserted and secured to the interior wall of housing 1 or retained within housing 1 for example by a friction fit, see FIG. 37. Cylindrical segment 15 has an upper surface with machined passageways or grooves 17 and a lower surface with machined passageways or grooves 19. Hole 26 provides fluid communication between grooves 17 and 19. Passing through cylindrical segment 15 is a central passageway 20. In most embodiments, an inner sleeve 22 is secured within central passageway 20 by any convenient method such as but not limited to friction fit, threading, or chemical binders. Inner sleeve 22 has a close tolerance clearance fit to provide a dynamic seal from the upper and lower portions of dynamic fluid chamber 41 during dynamic operation. Additionally, sleeve 22 and downward shaft 27 provide a dynamic seal under operational conditions. In the event that sleeve 22 is omitted, then shaft 27 and central passageway 20 will provide a dynamic seal under operational conditions.

Positioned above and secured to cylindrical segment 15 is a first cylinder plate 9a. First cylinder plate 9a includes a fluid port 23. Fluid port 23 provides fluid communication between the upper portion of fluid reservoir 41 and machined passageways 17, 19. Positioned below and secured to cylindrical segment15 is a second cylinder plate 9b. Second cylinder plate 9b includes a fluid port 25. Fluid port 25 provides fluid communication between lower portion of dynamic fluid reservoir 41 and machined passageways 17, 19. First and second cylinder plates 9a, 9b may be secured to cylindrical segment 15 by screws 11 or other convenient securing devices such as adhesives or friction fitting. When using screws 11, machine screws may pass through upper cylinder plate 9a through cylindrical segment 15 and into lower cylinder plate 9b. The manner of securing cylinder plates 9a, 9b to cylindrical segment 15 is not critical. Rather, the primary purpose of cylinder plates 9a, 9b is to provide a limiting position for upper and lower portions of dynamic fluid reservoir 41. Cylinder plates 9a, 9b close off the upper and lower surfaces of the fluid track including spiral passageways 17 and 19 thereby defining fluid flow path 8. Fluid flow path 8 provides fluid communication between these the upper and lower portions of dynamic fluid reservoir 41.

With reference to FIG. 2, upper chamber 16 includes an upper piston 6. Upper piston 6 defines the upper limit of dynamic fluid reservoir 41. Upper piston 6 carries or is secured to a downwardly projecting shaft or rod 27. In some embodiments, upper cylinder plate 9a will include an upwardly projecting flange 21 as depicted in FIGS. 2-6. The outer diameter of upper piston 6 is contained within and closely matches the inner diameter defined by upwardly projecting flange 21. Thus, piston 6 and upwardly projecting flange 21 provide a dynamic seal which substantially precludes fluid flow past the seal when the piston undergoes dynamic motion.

In the embodiment of FIG. 2, flange 21 effectively forms the cylinder within which piston 6 moves. However, flange 21 is optional. The primary requirement being a dynamic seal between piston 6 and either flange 21 or the interior of housing 1. Thus, in another embodiment, piston 6 may carry one or more piston rings 38 similar to an automotive piston ring. Piston ring 38 engages the interior wall of housing 1 or flange 21 to provide the desired dynamic seal. As another option, a cylinder sleeve 42 may be inserted between piston 6 and the interior wall of housing 1 such that cylinder sleeve 42 and piston 6, with or without a piston ring 38 provides the desired dynamic seal due to close tolerance machining.

Also located within upper chamber 16 is a flexure 4. Flexure 4 is characterized by sufficient stiffness so as to preclude a damping effect. Thus, flexure 4 should not balloon or stretch during dynamic operations. Flexure 4 is attached and sealed to upper cap 2 or to housing 1 at a position proximate to upper cap 2. Positioned within and secured to flexure 4 is a diaphragm 5. Diaphragm 5 is also secured to housing 1. Diaphragm 5 is a flexible component such as an elastomer. The area above diaphragm 5 and the point at which flexure 4 is secured to upper cap 2 or housing 1 defines a gas chamber 24. The area between diaphragm 5 and piston 6 defines a non-dynamic fluid chamber 39.

With continued reference to FIG. 2, lower chamber 18 includes a lower piston 7. Lower piston 7 defines the lower limit of dynamic fluid reservoir 41. In some embodiments, lower cylinder plate 9b will include a downwardly projecting flange 29 as depicted in FIGS. 2-6. The outer diameter of piston 7 is contained within and closely matches the inner diameter defined by downwardly projecting flange 29. Thus, piston 7 and downwardly projecting flange 29 provide a dynamic seal which substantially precludes fluid flow past the seal. Thus, for clarity dynamic fluid reservoir 41 is defined by the area between the lower surface of first piston 6, the interior wall of housing 1, the upper surface of first cylinder plate 9a, first groove 17, second groove 19, and the upper surface of second piston 7 and the lower surface of second cylinder plate 9b.

In the embodiment of FIG. 2, flange 29 effectively forms the cylinder within which piston 7 moves. However, flange 29 is optional. The primary requirement being a dynamic seal between piston 7 and either flange 29 or the interior of housing 1. Thus, in another embodiment, piston 7 may carry one or more piston rings 38 similar to an automotive piston ring. Piston ring 38 engages the interior wall of housing 1 or flange 29 to provide the desired dynamic seal. As another option, a cylinder sleeve 42 may be inserted between piston 6 and the interior wall of housing 1 such that cylinder sleeve 42 and piston 7, with or without a piston ring 38 provides the desired dynamic seal due to close tolerance machining. Piston 7 has a central passageway 34 located directly below central passageway 20 in cylindrical segment 15.

Also located within lower chamber 18 is a flexure 31. Flexure 31 is characterized by sufficient stiffness so as to preclude a damping effect. Thus, flexure 31 should not balloon or stretch during dynamic operations. Flexure 31 is attached and sealed to lower cap 3 or to housing 1 at a position proximate to lower cap 3. Positioned within and secured to flexure 31 is a diaphragm 32. Diaphragm 32 is also secured to housing 1. Diaphragm 32 is a flexible component such as an elastomer. The area below diaphragm 32 and the point at which flexure 31 is secured to lower cap 3 or housing 1 defines a gas chamber 33. The area between diaphragm 32 and piston 7 defines a non-dynamic fluid chamber 40.

Flexures 4 and 31 are bellows type flexures. In some embodiments flexures 4 and 31 may be metal or metallic flexures; however, other forms capable of providing the desired stiffness will also perform satisfactorily. The key functions provide by flexures 4 and 31 are sealing capability to prevent gas or fluid passing from the one side to the other and controlled spring rate. The flexure stiffness provides for static and dynamic load reactions. In most embodiments, the material used for flexures 4 and 31 is selected to precluded degradation when using organic fluids within isolator 10 and for the ability to enhance high temperature service life.

Shaft 27 projects downwardly from upper piston 6 through lower piston 7, lower cap 3 and inner sleeve 22. Lower piston 7 is secured to shaft 27 in a fluid tight manner such as threads and O-rings (not shown).

In one embodiment, shaft 27 extends downward through port 14 and to the exterior of lower cap 3 terminating in a mounting lug 35 or other common mounting point. In another embodiment a connecting rod 12 passes through port 14 and engages shaft 27. In this embodiment, connecting rod 12 carries mounting lug 35.

As noted above, isolator 10 is particularly suited for providing vibrational isolation between two components. For example, isolator 10 may be used as an engine mount securing an engine to a vehicle while reducing transmission of vibrations from the engine to the vehicle. To that end, upper cap 2 may optionally include a mounting lug 36. Additionally, housing 1 may include one or more mounting points 37. Thus, either lug 36 or mounting points 37 may secure isolator 10 to either an engine or vehicle frame with connecting rod 12 or downwardly projecting shaft 27 secured via lug 35 to an engine or vehicle frame to complete the integration of the engine to the vehicle. When securing an engine to a frame, mounting points 36, 37 or lug 35 may be secured to the engine with the other mounting point(s) secured to the frame. Isolator will perform equally well regardless of the connection arrangement.

With reference to FIGS. 1-7, as discussed above, the area above diaphragm 5 and the point at which flexure 4 is secured to upper cap 2 or housing 1 proximate to upper cap 2 defines an upper gas chamber 24 while the area below diaphragm 32 and the point at which flexure 31 is secured to lower cap 3 or housing 1 proximate to lower cap 3 defines a lower gas chamber 33. The area between diaphragm 5 and piston 6 defines an upper non-dynamic fluid chamber 39 while the area between diaphragm 32 and piston 7 defines a lower non-dynamic fluid chamber 40. Finally, a dynamic fluid reservoir 41 is defined as the volume between upper piston 6 and lower piston 7. As best seen in FIGS. 4-7, machined passageways 17, 19, fluid ports 23, 25 and hole 26 in cylindrical segment 15 provide a continuous fluid flow path 8 across or through cylindrical segment 15 providing fluid communication between the upper and lower portions of dynamic fluid reservoir 41. Hole 26 is not in alignment with fluid ports 23, 25. Rather, hole 26 is located such that the configuration of spiral passageways 17, 19, hole 26 and fluid ports 23, 25 ensures the greatest travel distance for fluid moving between the upper and lower portions of dynamic fluid reservoir 41. This distance is selected to provide the desired frequency for isolator 10, i.e. the notch effect. Further frequency tuning of isolator 10 can be achieved by changing the volume of fluid flow path 8 through the selection of the width and depth of spiral passageways 17, 19.

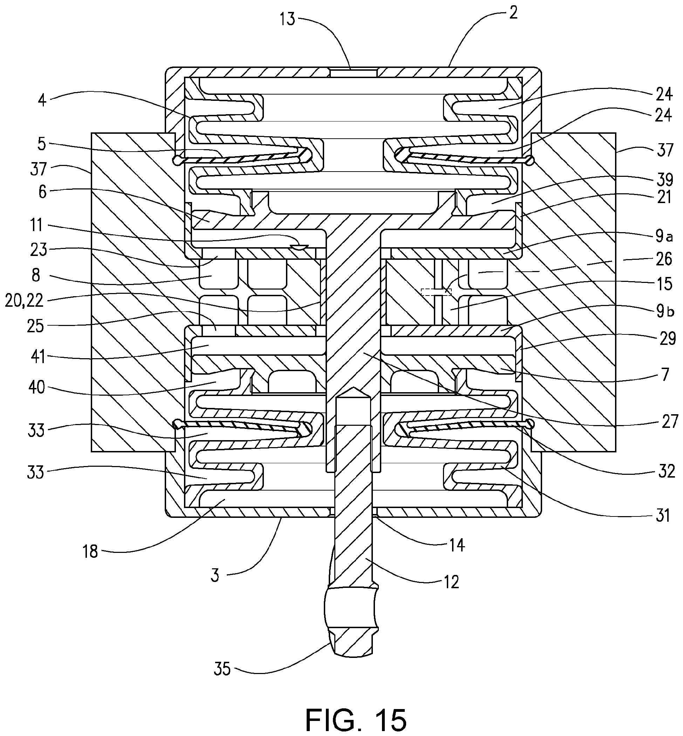

With reference to FIGS. 4, 6 and 7, hole 26 is located at the outer termination point of spiral passageway 17, i.e. groove 8, that is greatest from central passageway 20 while fluid ports 23, 25 are located at the beginning of spiral passageway 18, i.e. proximate to central passageway 20. The reverse configuration with hole 26 proximate to passageway 20 and fluid ports 23, 25 at the outer termination ends of spiral passageway 17, i.e. groove 8, can be seen in FIGS. 15-21. Dynamic fluid reservoir 41 and non-dynamic fluid chambers 39, 40 will typically contain a fluid such as a silicone based fluid or other fluid capable of high temperature operation; however, other fluids including conventional hydraulic fluids may also be used. In most embodiments, dynamic fluid reservoir 41 and non-dynamic chambers 39, 40 will be filled with fluid.

Pistons 6 and 7 move in response to forces applied to downwardly projecting shaft 27 or connecting rod 12 depending on the configuration of isolator 10. Movement of pistons 6 and 7 also results in movement of flexures 4 and 31 creating a resistive load in flexures 4 and 31. The motion of the liquid in the dynamic fluid reservoir 41 resulting from movement of pistons 6 and 7 will cause pressure differences above and below cylinder segment 15 creating the fluid notch effect typical of fluid based vibration isolators. See FIGS. 35 and 36. Upper and lower gas chambers 24, 33 removes or at least minimizes the impact of fluid in non-dynamic fluid chambers 39, 40. Additionally, upper and lower gas chambers 24, 33 compensate for thermal expansion of non-dynamic fluid chambers 39, 40 and motion of flexible diaphragms 5, 32.

The gas contained within upper and lower gas chambers 24, 33 experiences minimal pressure variation thereby minimizing pressure induced fatigue of flexible diaphragms 5, 32. At high dynamic velocity the leakage past the piston to cylinder interface is minimal, preferably no leakage occurs. Any degree of leakage will be less than that amount which will produce a damping effect. However under certain conditions, i.e. static condition, fluid may seep past the seal between pistons 6, 7 and flanges 21, 29 or other seal configuration allowing fluid into the non-dynamic fluid chambers 39, 40. During static conditions, the seals between these components do not satisfy the definition of "static seal." Rather, during periods when the engine or other source of vibration is not operating, isolator 10 will be under static conditions of non-movement. During this time, on those areas isolated by static seals will not experience leakage.

The length and cross-sectional area of the fluid flow path 8 are key variables when tuning isolator 10 to provide desired dynamic performance. Inlets and outlets 23, 25 to the track as well as all transitions within the track can be designed to minimize fluid loss. Fluid losses due to friction and flow disturbances can negatively affect the dynamic performance and notch depth.

The embodiment of FIGS. 1-7 and 14-21 provides the advantage of isolating dynamic pressures created by the fluid within dynamic fluid reservoir 41 from upper and lower flexures 4, 31. As a result, the area of the pistons 6, 7 is increased over the area of the bellows type flexures 4, 31 allowing for lower dynamic pressures within isolator 10. This reduces the required static pre-pressurization within gas chambers 24, 33 needed to prevent cavitation of the fluid. Pre-pressurization can be accomplished with a first Schrader valve 124 or other similar valve positioned within a port 28 providing fluid access to upper gas chamber 24 and a second Schrader valve 124 or other similar valve positioned within a port 28 providing fluid access to lower gas chamber 33. In some embodiments, a single port 28 may provide pressurization to both upper and lower gas chambers 24, 33. Additionally, in the embodiment of FIGS. 1-7, static loads are transmitted from connecting rod 12 or downwardly projecting shaft 27 to upper and lower pistons 6, 7 and through flexures 4, 31 to upper and lower caps 2, 3 and finally into housing 1. The fluid regions of isolator 10, non-dynamic reservoirs 39, 40 and dynamic reservoir 41, do not react static loads. Further, since the fluid is retained in the desired region by static seals, this embodiment does not utilize sliding seals for static sealing purposes in isolator 10. When used piston rings 38 create a dynamic seal. Thus, this embodiment eliminates leakage which commonly occurs when utilizing sliding seals in connection with dynamic applications such as the purpose of isolator 10. Finally, ports 13 and 14 allow chambers 16 and 18 to be under ambient atmospheric conditions.

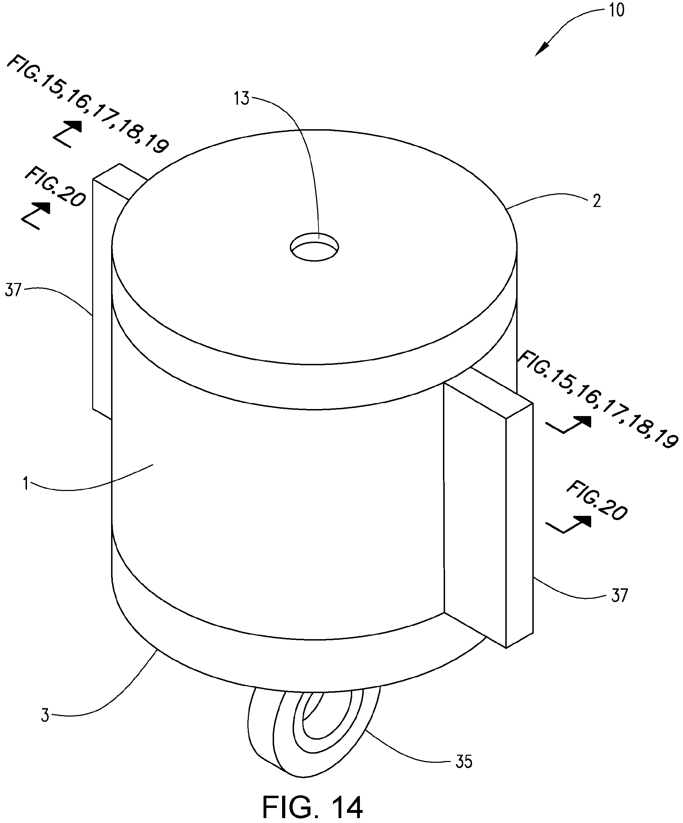

The embodiments of FIGS. 14-21 primarily differ from the embodiments of FIGS. 1-7 in positioning of ports 23, 25 and hole 26.

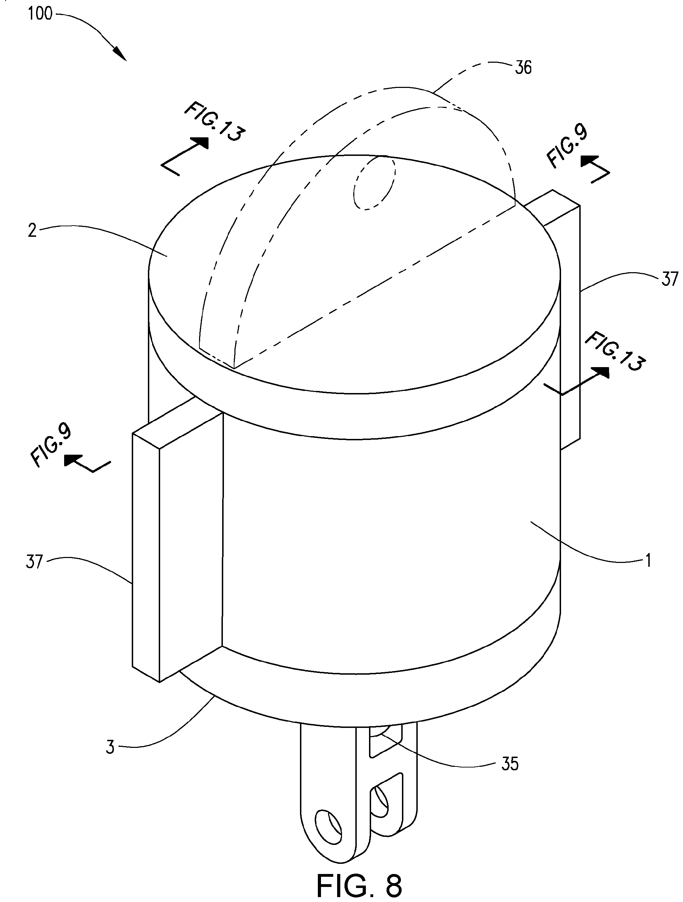

FIGS. 8-13 and 22-35 depict additional embodiments of isolator 10. Where like components are used, like identifiers are also used; however, this does not preclude substitution of differing elements consistent with this disclosure.

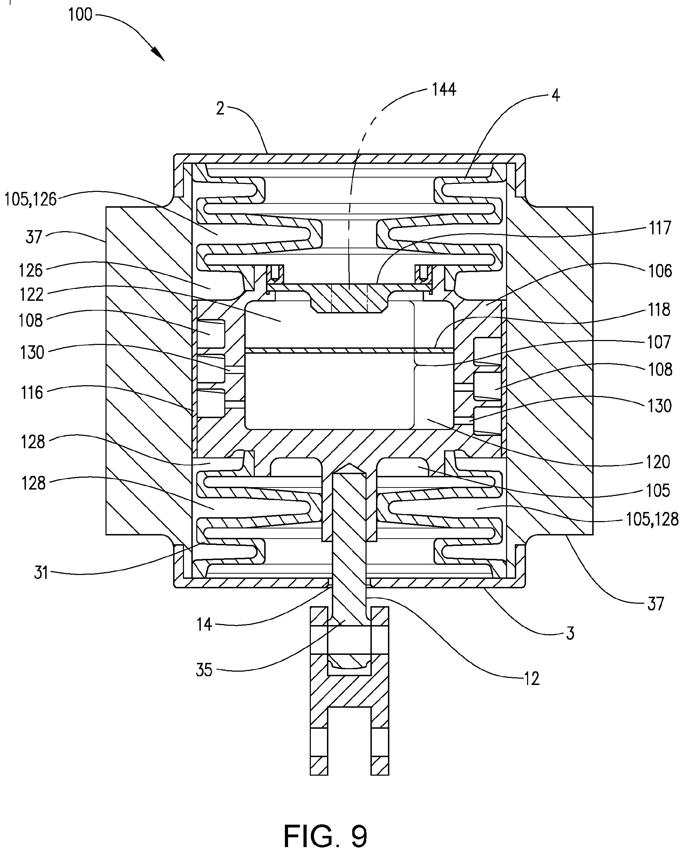

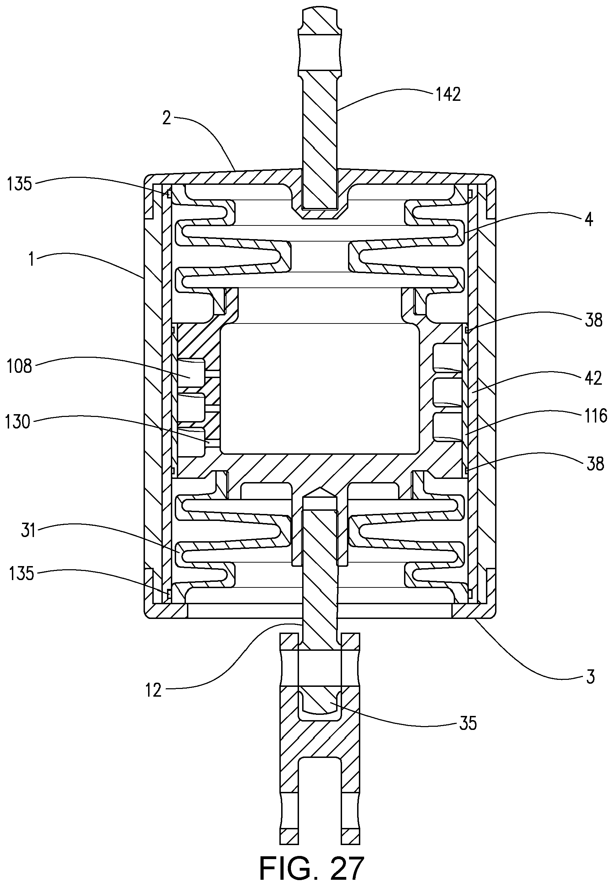

In the embodiment of FIGS. 8-13, 22-27 and 31-34, housing 1 includes upper and lower caps 2, 3 and optional mounting lugs 36, 37. The configuration of mounting lugs used will vary with the application of isolator 100. The interior of housing 1 defines an internal cavity 105 which houses a pair of flexures 4, 31 and a piston 106. As in the embodiment of FIGS. 1-7, flexures 4, 31 may be identical in nature or may have differing properties depending on the application of isolator 100. Flexure 4 has a fluid tight seal to either upper cap 2 or to the interior of housing 1 proximate to upper cap 2. The opposite end of flexure 4 is sealed to piston 106. Flexure 31 has a fluid tight seal to lower cap 3 or to the interior of housing 1 proximate to lower cap 3. The opposite end of flexure 31 is sealed to piston 106. As depicted in FIGS. 9, 27 and 31, an optional sleeve 116 is positioned over and fixed to piston 106. Sleeve 116 cooperates with exterior groove 108 to define a fluid flow path spiraling around piston 106. Housing 1 thus defines the bore in which piston 106 and sleeve 116 moves while sleeve 116 and piston 106 defines a piston assembly. Sleeve 116 may be press fitted to piston 106. Alternatively, sleeve 116 and piston 106 may be a single integral component. Additionally, as depicted in FIG. 27, piston 106 may optionally carry piston rings 38 located at the upper and/or lower ends of piston 106. While one set of rings 38 will suffice, better performance can be expected with two sets of rings 38. Piston rings 38 may be used in conjunction with cylinder sleeve 42 or without cylinder sleeve 42. Piston rings 38 may be carried directly by piston 106 or when sleeve 116 has been added to piston 106, piston rings 38 may be carried by sleeve 116.

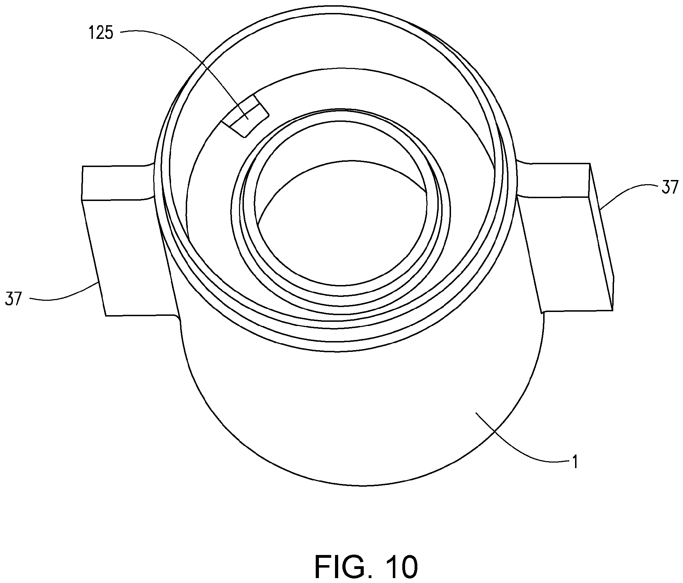

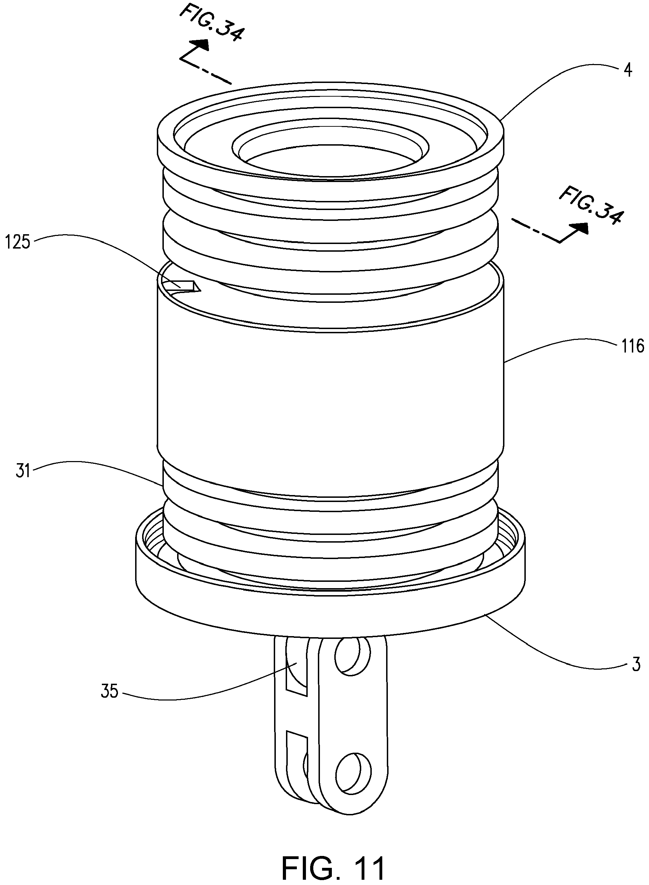

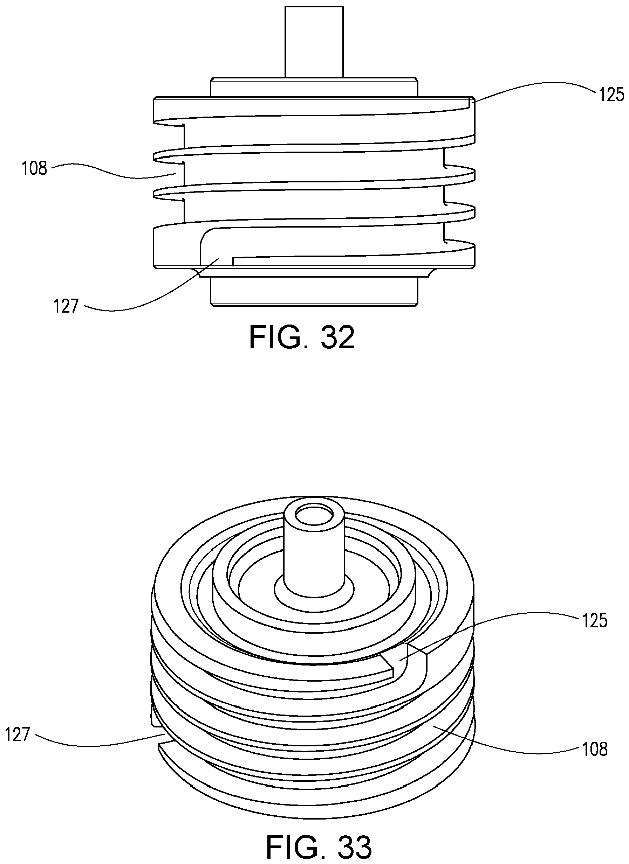

Piston 106 has a machined groove 108 on its exterior. Although shown in FIGS. 9, 12 and 13 as a spiral configuration, groove 108 can be configured in other forms. Groove 108 provides a fluid flow path from the upper end of piston 106 to the lower end. FIG. 10 depicts one opening 125 to the fluid flow path defined by groove 108. As discussed above, piston 106 may directly engage cylinder sleeve 42 or interior of housing 1. In each alternative embodiment, the fit of piston 106 with the surface engaged must define a dynamic seal such that fluid flows only through the fluid flow pathway defined by groove 108 fluid flow path. Thus, groove 108 provides the only fluid flow pathway between upper fluid chamber 126 and lower fluid chamber 128 via inlets 125 and 127 respectively. See FIGS. 11-12 and 31-34. FIGS. 32 and 33 provide a view of groove 108 and inlets 125, 127. Accordingly, in the embodiment of FIGS. 8-13 and 22-34, the dynamic fluid chamber is defined by upper fluid chamber 126, lower fluid chamber 128 and groove 108.

When piston rings 38 are used, at least one set of rings 38 are located on piston 106 or sleeve 116 to provide the desired dynamic seal for the fluid flow pathway. A pair of rings 38 are show in FIG. 27. The scope of upper fluid chamber 126 is defined by the interior wall of housing 1, interior surface of cap 2 and the exterior surface of flexure 4. The scope of lower fluid chamber 128 is defined by the interior wall of housing 1, interior surface of lower cap 3 and the exterior surface of flexure 31.

The interior of piston 106 includes a hollow chamber 107. Chamber 107 is open at the top; however, a sealing plug 117 provides an airtight seal at the top of hollow chamber 107. In some embodiments, a separating diaphragm 118 is positioned within chamber 107. Separating diaphragm 118 divides chamber 107 into a dynamic fluid reservoir 120 and a gas chamber 122. In most embodiments, a gas charging valve 124, e.g. a Schrader valve, will be provided to permit charging of gas into gas chamber 122. Thus, the gas charging valve provides for controlled fluid communication with gas chamber 122 to provide the desired gas pressure within gas chamber 122. In the configuration of FIGS. 9 and 23-25, charging valve 124 is positioned within an optional opening 144 located in sealing plug 117. Opening 144 will not be present if the charging valve 124 is not used. Dynamic fluid reservoir 120 typically contains a fluid such as a silicone based fluid or other fluid capable of high temperature operation; however, other fluids including conventional hydraulic fluids may also be used.

As depicted in FIGS. 9, 23-25 and 27, piston 106 also includes one or more ports or fluid passages 130. Ports 130 provide fluid communication between dynamic fluid reservoir 120 and groove 108. Ports 130 are sized to limit fluid communication such that fluid passage is dynamically choked at the tuned frequency for the supported device typically coincident to the notch frequency. Fluid passage only occurs at very low frequency to accommodate thermal fluid expansion. Port(s) 130 may be located in many locations so long as they provide fluid communication between fluid chambers 126, 128 and dynamic reservoir 120 while precluding fluid communication with gas chamber 122.

Gas chamber 122 acts as a volume compensator. In high temperature environments, fluid in dynamic fluid reservoir 120 and groove 108 and fluid chambers 126, 128 will expand. Gas chamber 122 compensates for this thermal expansion thereby reducing the likelihood of fluid leakage under static and dynamic conditions.

In these additional embodiments, connecting rod 12 is secured to or carried by piston 106. Thus, movement of connecting rod 12 in turn moves piston 106 thereby reducing volume in either chamber 126 or 128. As a result, fluid flows in the direction of the opposite chamber which has experienced an increase in volume. As fluid moves from one chamber 126 or 128 to the other chamber the resistance to fluid flow, known as fluid inertial effect, isolates those components joined by isolator 100.

For all embodiments, when using flexures 4, 31 which are metallic in nature the defined fluid chambers 126, 128 will be capable of handling high pressure exposure. Typically pressures up to about 500 psi (about 3450 kPa) and above can be accommodated. Additionally, metallic flexures 4, 31 will provide increase service life as they are less affected by high cyclic pressures. As another benefit, isolator 100 will provide an inertia track, as defined by groove 108 and chambers 126, 128, capable of very long and large cross-sectional area. Further, the disclosed configurations of all FIGS. permit operation at high temperatures as the configurations do not place elastomeric springs or diaphragms under high strain conditions. This is a result of isolating such components from the dynamic pressures or replacement of elastomeric spring with metal or metallic flexure elements. Additionally, the disclosed embodiments eliminate the damping aspect of elastomeric springs by use of metal or metallic flexures thereby permitting improved dynamic performance. Also, isolators 10 will have very low creep or drift, i.e. the isolators reduce shifting of secured components. Overall, the disclosed isolators provide fluid based isolators capable of operating under conditions in excess of 180°C. The limiting factor for the disclosed isolators being the fluid used.

In addition to the above discussed embodiments of FIGS. 8-13 and 22-35, FIGS. 26 and 27 depict another alternative in which a second or upper connecting rod 142 provides the second point of attachment for isolator 100. In this embodiment, connecting rod 142 may be secured to cap 2 by any convenient arrangement such as bonding, welding or threads. Alternatively connecting rod 142 may be integrally formed with cap 2.

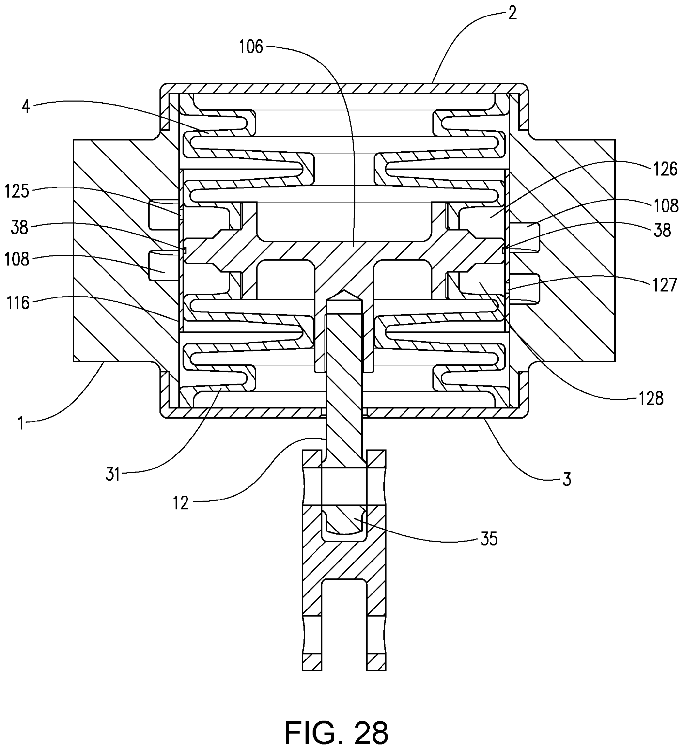

FIGS. 28-30 depict another embodiment having a single piston 106. Except as discussed below, the components, areas and function of the embodiment of FIGS. 28-30 correspond to those described above with reference to FIGS. 8-14 and 22-27. In this embodiment, groove 108 is located in housing 1. Fluid chamber 126 is defined by the top of piston 106, sleeve 116 and the exterior surface of flexure 4. Fluid chamber 128 is defined by the bottom of piston 106, sleeve 116 and the exterior surface of flexure 31. Accordingly, in the embodiment of FIGS. 28-30, the dynamic fluid chamber is defined by upper fluid chamber 126, lower fluid chamber 128 and groove 108. Piston 106 may optionally carry a piston ring 38. However, in this embodiment sleeve 116 does not move with piston 106. Rather, sleeve 116 is secured or fixed to the interior wall of housing 1. Thus, sleeve 116 defines the cylinder wall for piston 116 and separates groove 108 from upper and lower fluid chambers 126, 128. Since sleeve 116 does not move, a port 125 provides fluid communication between one end of groove 108 and upper fluid chamber 126. Likewise, a port 127 provides fluid communication between another end of groove 108 and lower fluid chamber 128. The location of ports 125 and 127 provides the desired distance for fluid travel through groove 108 to generate the desired notch effect.

As in the embodiments discussed above, the engagement of piston 106 with stationary sleeve 116 provides a dynamic seal during operational conditions. Thus, during operational conditions, fluid passes through ports 125 and 127 located in stationary sleeve 116 and through groove 108 in response to movement of piston 106. The resulting dynamic motion isolates vibrations generated by a supported device such as an engine, not shown, from the supporting frame, not shown.

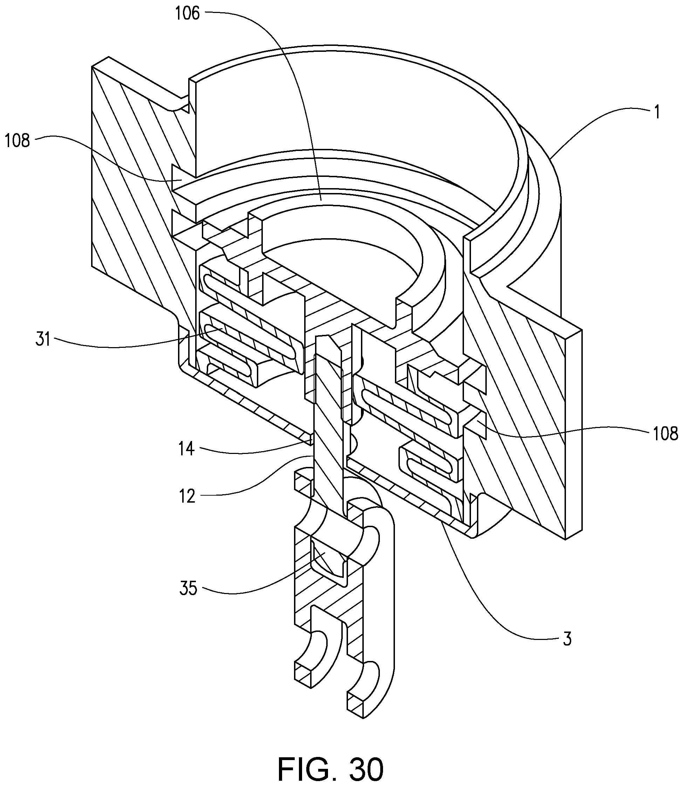

For the embodiment of FIGS. 28-30, the remaining elements such as housing 1, cap 2, flexures 4, 31 and upper and lower gas chambers 24, 33 correspond to those described in the embodiments above. Likewise, various configurations of mounting lugs 36, 37 may be used in connection with this embodiment along with the various upper and lower connecting rods. The primary aspect of FIGS. 28-30 is the demonstration of groove 108 within housing 1. In order to better depict upper and lower fluid chambers 126, 128 and groove 108, FIG. 30 does not depict sleeve 116 or piston ring 38.

Isolator 10 would generate high inertial effect forces, i.e. notch effect, due to cyclic deflections by moving the higher viscosity fluid through the fluid track as depicted in FIGS. 35-36. As demonstrated by FIG. 36, it reduces the transfer function of input force to isolate a deflection at the tuned frequency. The notch reflects the reduction in the input force v. deflection response at the tuned frequency. Tuning may be achieved by reducing the fluid track in size to increase the resistance to fluid flow. Thus, the configuration of isolator 10 reduces damping losses which would be determinantal to this inertial style isolator. The desired impact of isolator 10 is the generating of notch depth as depicted in FIG. 36. Addition of damping to the system will limit the ability to generate the desired notch depth. The notch depth reflects the isolation capabilities of isolator 10.

The operation of the various embodiments of vibration isolators 10, 100 relies upon the presence of the dynamic seal between the components of isolators 10, 100 which define the dynamic fluid chamber. The presence of the dynamic seal precludes damping effects within isolators 10, 100. As known to those skilled in the art, damping within isolators 10, 100 would be detrimental to the generation of the desired notch effect necessary for isolating components joined by isolators 10, 100. To precluding damping within isolators 10, 100, the dynamic seal will allow no more than a minute amount of fluid past the components of the dynamic fluid chamber. Essentially, the dynamic seal precludes fluid passage outside of the desired pathway during operation conditions. Therefore, isolators 10, 100 do not provide a damping effect to the system in which they are used.

The ability to tune the various embodiments of isolators 10, 100 can be demonstrated with reference to FIGS. 35, 36 and 38. FIGS. 35, 36 depict an example of the transfer function for a tuned isolator 10, 100. During operation, fluid within the dynamic fluid chamber is pumped through fluid flow path 8 or groove 108 by vibratory deflection input to isolator 10, 100. The fluid mass, constrained by the elements defining the dynamic fluid chamber, responds dynamically during the pumping action, i.e. vibrator input changes the position of pistons 6, 7 or piston 106. In the embodiment of FIGS. 1-7 and 14-21, the positional change in pistons 6, 7 changes the volume in the upper and lower chambers 16, 18. Likewise in the embodiment of FIGS. 8-13 and 22-35, movement of piston 106 changes the volume in upper fluid chamber 126 and lower fluid chamber 128. The dynamic resonant response of the fluid is tuned by control of the volume in the dynamic chambers and corresponding flow paths such that resonant response of the fluid combines in an out-of-phase manner with the vibratory input to cancel the vibrations generated by one of the devices, e.g. an engine, connected to isolator 10, 100. Thus, the input deflections generates pressure fluctuations in the dynamic chamber of isolator 10, 100.

In determining the desired resonant frequency, i.e. the notch frequency, the parameters for the necessary calculations are:
Km = mount stiffness
Kvt and Kvb = volume stiffness of the dynamic chambers
At = cross-sectional area of the fluid track or groove
Ap = effective piston area of chambers 16, 18, 128, 128, defined as the volume of fluid displaced in each chamber by movement across the piston(s)
Mf = mass of the fluid, i.e., the mass of the fluid in the fluid flow path

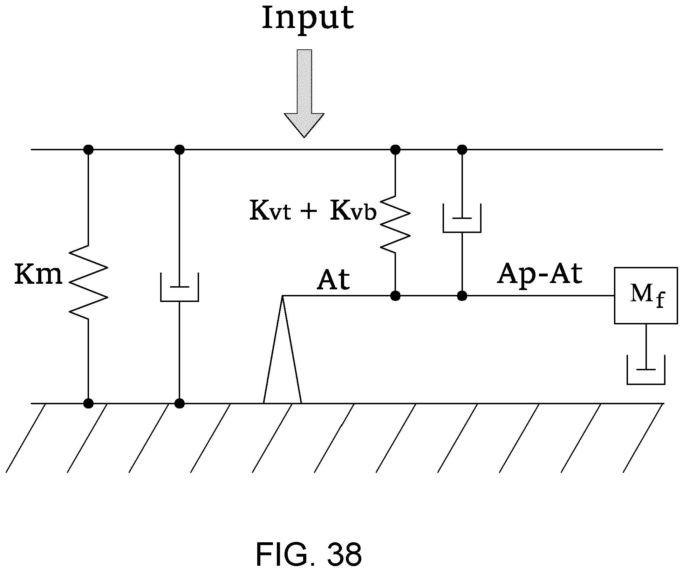

The objective is the create a deep notch in the force versus deflection transfer function of the vibration isolators 10, 100. The deep notch effect corresponds to the effectiveness at isolating vibrations. With reference to FIG. 38, by running a dynamic input to the mathematical model of FIG. 38 using the above parameters will yield a frequency response as exemplified in FIGS. 35 and 36.

Further aspects and embodiments of the present disclosure are detailed in the following numbered clauses:
1. A vibration isolator comprising: a housing, the housing having an interior wall which defines an internal cavity; an upper cap secured to the top of the housing; a lower cap secured to the bottom of the housing; a first flexure positioned adjacent to the upper cap, the first flexure having an exterior surface and the first flexure having a fluid tight seal to either the upper cap or the housing proximate to the upper cap; a second flexure positioned adjacent to the lower cap, the second flexure having an exterior surface and the second flexure having a fluid tight seal to either the lower cap or the housing proximate to the lower cap; a piston located within the internal cavity, the piston having an exterior surface, a top and a bottom, wherein the top of the piston has a fluid tight seal with the first flexure and the bottom of the piston has a fluid tight seal with the second flexure; the exterior surface of the piston having an external diameter sized to fit against the interior wall of the housing such that movement of the piston within the housing produces a dynamic seal between the exterior surface of the piston and the interior wall of the housing; a groove positioned in the exterior surface of the piston, the groove providing a fluid path from the top of the piston to the bottom of the piston wherein the groove terminates at a first port in the top of the piston and terminates at a second port at the bottom of the piston; a first fluid chamber defined by the area between the top of the piston, the interior wall of the housing and the exterior surface of the first flexure; a second fluid chamber defined by the area between the bottom of the piston, the interior wall of the housing and the exterior surface of the second flexure; wherein the first fluid chamber, the second fluid chamber and the fluid path defined by the groove position on the exterior piston define a dynamic fluid chamber.
2. The vibration isolator of clause 1, further comprising a sleeve positioned over the exterior surface of the piston, wherein the exterior diameter of the piston is less than the interior diameter defined by the interior wall of the housing and wherein the combination of the sleeve and piston define a piston assembly which has an external diameter sized to fit against the interior wall of the housing such that movement of the piston assembly within the housing produces a dynamic seal between the exterior surface of the piston and the interior wall of the housing.
3. The vibration isolator of clause 1 or clause 2, further comprising at least one piston ring carried by the piston assembly wherein the cooperation of the piston ring and the interior wall of the housing provides a dynamic seal during movement of the piston assembly within the housing.
4. The vibration isolator of any preceding clause, further comprising a mounting lug carried by the top cap and a connecting rod carried by the piston, wherein the connecting rod extends through an opening located in the lower cap.
5. The vibration isolator of any preceding clause, further comprising at least one mounting lug carried by a side of the housing and a connecting rod carried by the piston, wherein the connecting rod extends through an opening located in the lower cap.
6. The vibration isolator of any preceding clause, wherein the piston has an interior which defines a hollow chamber, the chamber having an opening at the top of the piston and a sealing plug positioned within the opening to provide an air tight seal.
7. The vibration isolator of clause 6, further comprising: a diaphragm separating the hollow chamber into a dynamic fluid reservoir and a gas chamber; and, a gas charging valve positioned within the sealing plug, the gas charging valve providing controlled fluid communication with the gas chamber.
8. The vibration isolator of clause 7, further comprising one or more fluid passages providing fluid communication between the dynamic fluid reservoir and the fluid path defined by the groove.
9. The vibration isolator of any preceding clause, wherein the first and second flexures are metallic and the first and second fluid chambers may be pressurized to at least 3450 kPa.
10. The vibration isolator of any preceding clause, further comprising a first connecting rod carried by the piston, the first connecting rod extends through an opening located in the lower cap and a second connecting rod carried by the upper cap.
11. A vibration isolator comprising: a housing, the housing having an interior wall which defines an internal cavity; an upper cap secured to the top of the housing; a lower cap secured to the bottom of the housing, the lower cap having a hole passing through the lower cap; a first flexure positioned adjacent to the upper cap, the first flexure having an exterior surface and the first flexure having a fluid tight seal to either the upper cap or the housing proximate to the upper cap; a second flexure positioned adjacent to the lower cap, the second flexure having an exterior surface and the second flexure having a fluid tight seal to either the lower cap or the housing proximate to the lower cap; a first diaphragm secured to the housing, the first diaphragm having an upper and a lower surface; the exterior of the first flexure, the upper surface of the first diaphragm and the interior wall of the housing define a first gas chamber; a second diaphragm secured to the housing, the second diaphragm having an upper and a lower surface; the exterior of the second flexure, the lower surface of the second diaphragm and the interior wall of the housing define a second gas chamber; a cylindrical segment located between the first diaphragm and the second diaphragm, the cylindrical segment having an upper surface with a first groove in the upper surface, the cylinder segment having a lower surface with a second groove in the lower surface, a hole in the cylindrical segment provides fluid communication between the first and second grooves; a central passageway passing through the cylindrical segment from the upper surface to the lower surface; a first cylinder plate covers the upper surface of the cylindrical segment, the first cylinder plate having a first fluid port providing fluid communication through the first cylinder plate to the first groove; a second cylinder plate covers the lower surface of the cylindrical segment, the second cylinder plate having second fluid port providing fluid communication through the second cylinder plate to the second groove; the first cylinder plate, the first groove, the second cylinder plate and the second groove cooperate to define a fluid flow path; a first piston having an upper surface, a lower surface and an outer surface, the first piston positioned above the first cylinder plate with the first piston outer surface in contact with the interior wall of the housing, the first piston providing a dynamic seal with the interior wall of the housing when the first piston moves; a second piston having an upper surface, a lower surface and an outer surface, positioned below the second cylinder plate with the second piston outer surface in contact with the interior wall of the housing, the second piston providing a dynamic seal with the interior wall of the housing when the second piston moves; a dynamic fluid chamber defined by the area between the lower surface of the first piston, the interior wall of the housing, the upper surface of the first cylinder plate, the first groove, the second groove, and the upper surface of the second piston; a first non-dynamic fluid chamber defined by the upper surface of the first piston and the lower surface of the first diaphragm; a second non-dynamic fluid chamber defined by the lower surface of the second piston and the upper surface of the second diaphragm; a first gas chamber defined by the upper surface of the first diaphragm, the interior wall of the housing and the exterior surface of the first flexure; a second gas chamber defined by the lower surface of the second diaphragm, the interior wall of the housing and the exterior surface of the second flexure; and, a first shaft carried by the first piston, the first shaft extending downward through the central passageway passing through the cylindrical segment, the second piston secured to the first shaft, a connecting rod secured to the first shaft and extending through the hole passing through the lower cap.
12. The vibration isolator of clause 11, wherein the cylindrical segment located between the first diaphragm and the second diaphragm is press fit into the internal cavity defined by interior wall of the housing.
13. The vibration isolator of clause 11, wherein the cylindrical segment located between the first diaphragm and the second diaphragm is integrally formed as an element of the housing.
14. The vibration isolator of any of clauses 11 to 13, wherein the upper cap has a third port, the third port providing fluid communication with the first gas chamber and wherein the lower cap has a fourth port, the fourth port providing fluid communication with the second gas chamber and at least one gas charging valve positioned in either the third port or the fourth port.
15. The vibration isolator of any of clauses 11 to 14, further comprising: a first inner sleeve secured within the central passageway of the cylindrical element, the first inner sleeve and the first shaft cooperate to define a dynamic seal during movement of the first piston.
16. The vibration isolator of any of clauses 11 to 15, wherein the upper cylinder plate carries an upwardly projecting flange having an outer diameter and an inner surface, the outer diameter matches the inner diameter of the housing interior wall; and the first piston has an outer diameter such that the first piston outer surface engages the inner surface of the upwardly projecting flange and upon movement of the first piston the first piston outer surface and the inner surface of the upwardly projecting flange define a dynamic seal and wherein the lower cylinder plate carries a downwardly projecting flange having an outer diameter and an inner surface, the outer diameter matches the inner diameter of the housing interior wall; and the second piston has an outer diameter such that the second piston outer surface engages the inner surface of the downwardly projecting flange and upon movement of the second piston the second piston outer surface and the inner surface of the downwardly projecting flange define a dynamic seal.
17. The vibration isolator of clause 16, further comprising: a first piston ring carried by the outer surface of the first piston wherein the first piston ring engages the inner surface of the upwardly projecting flange; and, a second piston ring carried by the outer surface of the second piston wherein the second piston ring engages the inner surface of the downwardly projecting flange.
18. The vibration isolator of any of clauses 11 to 17, further comprising: a first piston ring carried by the outer surface of the first piston wherein the first piston ring engages the interior wall of the housing; and, a second piston ring carried by the outer surface of the second piston wherein the second piston ring engages the interior wall of the housing.
19. The vibration isolator of any of clauses 11 to 18, wherein the first flexure is a metallic bellow type flexure and the second flexure is a metallic bellow type flexure.
20. The vibration isolator of any of clauses 11 to 19, wherein the hole within the cylindrical segment does not align with the first port in the first cylinder plate and does not align with the second port in the second cylinder plate.
21. The vibration isolator of clause 20, wherein the first groove in the upper surface of the cylindrical segment begins at an interior location and circles outward in a spiral to a first terminal location and the second groove in the lower surface of the cylindrical segment begins at an interior location and circles outward in a spiral to a second terminal location and wherein the hole within the cylindrical segment provides fluid communication between the first groove and the second groove.
22. The vibration isolator of clause 20 or clause 21, wherein the hole within the cylindrical segment is located such that the configuration of the first groove in the upper surface of the cylindrical segment and the second groove in the lower surface of the cylindrical segment provides the greatest distance between the first fluid port in the first cylinder plate and the second fluid port in the second cylinder plate.
23. A vibration isolator comprising: a housing, the housing having an interior wall which defines an internal cavity; an upper cap secured to the top of the housing; a lower cap secured to the bottom of the housing; a first flexure positioned adjacent to the upper cap, the first flexure having an exterior surface and the first flexure having a fluid tight seal to either the upper cap or the housing proximate to the upper cap; a second flexure positioned adjacent to the lower cap, the second flexure having an exterior surface and the second flexure having a fluid tight seal to either the lower cap or the housing proximate to the lower cap; a piston located within the internal cavity, the piston having an exterior surface, a top and a bottom, wherein the top of the piston has a fluid tight seal with the first flexure and the bottom of the piston has a fluid tight seal with the second flexure; a sleeve secured to the interior wall of the housing, the sleeve separates the piston from the housing and provides a cylinder wall for the piston; the exterior surface of the piston having an external diameter sized to fit against the sleeve such that movement of the piston produces a dynamic seal between the exterior surface of the piston and the sleeve; a groove positioned in the interior wall of the housing, the groove providing a fluid path from the top of the piston to the bottom of the piston wherein a first end of the groove terminates at a first port in the sleeve and a second end of the groove terminates at a second port in the sleeve; a first fluid chamber defined by the area between the top of the piston, the sleeve and the exterior surface of the first flexure; a second fluid chamber defined by the area between the bottom of the piston, the sleeve and the exterior surface of the second flexure; wherein the first fluid chamber, the second fluid chamber and the fluid path defined by the groove define a dynamic fluid chamber.
24. The vibration isolator of clause 23, further comprising at least one piston ring carried by the piston wherein the cooperation of the piston ring and the sleeve provides a dynamic seal during movement of the piston assembly within the sleeve.
25. The vibration isolator of clause 23 or clause 24, further comprising a mounting lug carried by the top cap and a connecting rod carried by the piston, the connecting rod extends through an opening located in the lower cap.
26. The vibration isolator of any of clauses 23 to 25, further comprising at least one mounting lug carried by a side of the housing and a connecting rod carried by the piston, the connecting rod extends through an opening located in the lower cap.
27. The vibration isolator of any of clauses 23 to 26, wherein the piston has an interior which defines a hollow chamber, the chamber having an opening at the top of the piston and a sealing plug positioned within the opening to provide an air tight seal.
28. The vibration isolator of clause 27, further comprising: a diaphragm separating the hollow chamber into a dynamic fluid reservoir and a gas chamber; and, a gas charging valve positioned within the sealing plug, the gas charging valve providing controlled fluid communication with the gas chamber.
29. The vibration isolator of clause 28, further comprising one or more fluid passages providing fluid communication between the dynamic fluid reservoir and the fluid path defined by the groove.
30. The vibration isolator of any of clauses 23 to 29, wherein the first and second flexures are metallic and the first and second fluid chambers may be pressurized to at least 3450 kPa.
31. The vibration isolator of any of clauses 23 to 30, further comprising a first connecting rod carried by the piston, the first connecting rod extends through an opening located in the lower cap and a second connecting rod carried by the upper cap.

Other embodiments of the present invention will be apparent to one skilled in the art. As such, the foregoing description merely enables and describes the general uses and methods of the present invention. Accordingly, the following claims define the true scope of the present invention.

## Claims

1. A vibration isolator comprising:
a housing, the housing having an interior wall which defines an internal cavity;
an upper cap secured to the top of the housing;
a lower cap secured to the bottom of the housing;
a first flexure positioned adjacent to the upper cap, the first flexure having an exterior surface and the first flexure having a fluid tight seal to either the upper cap or the housing proximate to the upper cap;
a second flexure positioned adjacent to the lower cap, the second flexure having an exterior surface and the second flexure having a fluid tight seal to either the lower cap or the housing proximate to the lower cap;
a piston located within the internal cavity, the piston having an exterior surface, a top and a bottom, wherein the top of the piston has a fluid tight seal with the first flexure and the bottom of the piston has a fluid tight seal with the second flexure;
the exterior surface of the piston having an external diameter sized to fit against the interior wall of the housing such that movement of the piston within the housing produces a dynamic seal between the exterior surface of the piston and the interior wall of the housing;
a groove positioned in the exterior surface of the piston, the groove providing a fluid path from the top of the piston to the bottom of the piston wherein the groove terminates at a first port in the top of the piston and terminates at a second port at the bottom of the piston;
a first fluid chamber defined by the area between the top of the piston, the interior wall of the housing and the exterior surface of the first flexure;
a second fluid chamber defined by the area between the bottom of the piston, the interior wall of the housing and the exterior surface of the second flexure;
wherein the first fluid chamber, the second fluid chamber and the fluid path defined by the groove position on the exterior piston define a dynamic fluid chamber.

2. The vibration isolator of claim 1, further comprising a sleeve positioned over the exterior surface of the piston, wherein the exterior diameter of the piston is less than the interior diameter defined by the interior wall of the housing and wherein the combination of the sleeve and piston define a piston assembly which has an external diameter sized to fit against the interior wall of the housing such that movement of the piston assembly within the housing produces a dynamic seal between the exterior surface of the piston and the interior wall of the housing.

3. The vibration isolator of claim 1 or claim 2, further comprising at least one piston ring carried by the piston assembly wherein the cooperation of the piston ring and the interior wall of the housing provides a dynamic seal during movement of the piston assembly within the housing.

4. The vibration isolator of any preceding claim, further comprising a mounting lug carried by the top cap and a connecting rod carried by the piston, the connecting rod extends through an opening located in the lower cap.

5. The vibration isolator of any preceding claim, further comprising at least one mounting lug carried by a side of the housing and a connecting rod carried by the piston, the connecting rod extends through an opening located in the lower cap.

6. The vibration isolator of any preceding claim, wherein the piston has an interior which defines a hollow chamber, the chamber having an opening at the top of the piston and a sealing plug positioned within the opening to provide an air tight seal.

7. The vibration isolator of claim 6, further comprising:
a diaphragm separating the hollow chamber into a dynamic fluid reservoir and a gas chamber; and,
a gas charging valve positioned within the sealing plug, the gas charging valve providing controlled fluid communication with the gas chamber.

8. The vibration isolator of claim 7, further comprising one or more fluid passages providing fluid communication between the dynamic fluid reservoir and the fluid path defined by the groove.

9. The vibration isolator of any preceding claim, wherein the first and second flexures are metallic and the first and second fluid chambers may be pressurized to at least 3450 kPa.

10. The vibration isolator of any preceding claim, further comprising a first connecting rod carried by the piston, the first connecting rod extends through an opening located in the lower cap and a second connecting rod carried by the upper cap.
